(19) Europäisches Patentamt / European Patent Office / Office européen des brevets

(11) **EP 2 735 152 B1**

## (12) EUROPEAN PATENT SPECIFICATION

(45) Date of publication and mention
of the grant of the patent:
**20.06.2018   Bulletin 2018/25**

(21) Application number: **12740273.3**

(22) Date of filing: **20.07.2012**

(51) Int Cl.:
$H04N\ 19/172^{(2014.01)}$      $H04N\ 19/174^{(2014.01)}$
$H04N\ 19/176^{(2014.01)}$      $H04N\ 19/44^{(2014.01)}$
$H04N\ 19/46^{(2014.01)}$      $H04N\ 19/51^{(2014.01)}$
$H04N\ 19/597^{(2014.01)}$      $H04N\ 19/61^{(2014.01)}$
$H04N\ 19/70^{(2014.01)}$      $H04N\ 19/50^{(2014.01)}$
$H04N\ 13/00^{(2018.01)}$      $H04L\ 29/06^{(2006.01)}$

(86) International application number:
**PCT/US2012/047701**

(87) International publication number:
**WO 2013/016231 (31.01.2013 Gazette 2013/05)**

(54) **MVC BASED 3DVC CODEC SUPPORTING INSIDE VIEW MOTION PREDICTION (IVMP) MODE**

AUF MVC BASIERENDER 3DVC-CODEC ZUR UNTERSTÜTZUNG EINES IVMP-MODUS

CODEC 3DVC PAR CODAGE MVC PRENANT EN CHARGE UN MODE DE PRÉDICTION DE MOUVEMENT INTRA-VUE (IVMP)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2011   US 201161510738 P**
**11.08.2011   US 201161522584 P**
**11.08.2011   US 201161522559 P**
**18.11.2011   US 201161561800 P**
**26.11.2011   US 201161563772 P**
**26.11.2011   US 201161563771 P**
**13.04.2012   US 201261624031 P**
**19.07.2012   US 201213553315**

(43) Date of publication of application:
**28.05.2014   Bulletin 2014/22**

(73) Proprietor: **Qualcomm Incorporated**
**San Diego, CA 92121-1714 (US)**

(72) Inventors:
• **CHEN, Ying**
  **San Diego, CA 92121 (US)**
• **ZHANG, Li**
  **San Diego, CA 92121 (US)**
• **KARCZEWICZ, Marta**
  **San Diego, CA 92121 (US)**

(74) Representative: **Howe, Steven**
**Reddie & Grose LLP**
**The White Chapel Building**
**10 Whitechapel High Street**
**London E1 8QS (GB)**

(56) References cited:
**WO-A2-2009/091383**

• **GREWATSCH S ET AL: "Sharing of motion vectors in 3D video coding", IMAGE PROCESSING, 2004. ICIP '04. 2004 INTERNATIONAL CONFERENCE ON SINGAPORE 24-27 OCT. 2004, PISCATAWAY, NJ, USA,IEEE, vol. 5, 24 October 2004 (2004-10-24), pages 3271-3274, XP010786495, DOI: 10.1109/ICIP.2004.1421812 ISBN: 978-0-7803-8554-2**
• **HAN OH ET AL: "H.264-Based Depth Map Sequence Coding Using Motion Information of Corresponding Texture Video", 1 January 2006 (2006-01-01), ADVANCES IN IMAGE AND VIDEO TECHNOLOGY LECTURE NOTES IN COMPUTER SCIENCE;;LNCS, SPRINGER, BERLIN, DE, PAGE(S) 898 - 907, XP019052993, ISBN: 978-3-540-68297-4 the whole document**

EP 2 735 152 B1

- **YING CHEN ET AL: "Description of 3D video coding technology proposal by Qualcomm Incorporated", 98. MPEG MEETING; 28-11-2011 - 2-12-2011; GENEVA; (MOTION PICTURE EXPERT GROUP OR ISO/IEC JTC1/SC29/WG11),, no. m22583, 21 November 2011 (2011-11-21), pages 1-21, XP030051146,**

**Description**

This application claims the benefit of:

U.S. Provisional Patent Application 61/561,800, filed on November 18, 2011;
U.S. Provisional Patent Application 61/563,771, filed on November 26, 2011;
U.S. Provisional Patent Application 61/522,559, filed on August 11, 2011; and
U.S. Provisional Patent Application 61/510,738, filed on July 22, 2011;
U.S. Provisional Patent Application 61/522,584, filed August 11, 2011,
U.S. Provisional Patent Application 61/563,772, filed November 26, 2011, and
U.S. Provisional Patent Application 61/624,031, filed April 13, 2012.

**TECHNICAL FIELD**

This disclosure relates to three-dimensional (3D) video coding.

**BACKGROUND**

Digital video capabilities can be incorporated into a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, and the like. Digital video devices implement video compression techniques, such as those described in the standards defined by MPEG-2, MPEG-4, ITU-T H.263, ITU-T H.264/MPEG-4, Part 10, Advanced Video Coding (AVC), the High Efficiency Video Coding (HEVC) standard presently under development, and extensions of such standards. The video devices may transmit, receive, encode, decode, and/or store digital video information more efficiently by implementing such video compression techniques.

Video compression techniques perform spatial (intra-picture) prediction and/or temporal (inter-picture) prediction to reduce or remove redundancy inherent in video sequences. For block-based video coding, a video slice (i.e., a video frame or a portion of a video frame) may be partitioned into video blocks, which may also be referred to as treeblocks, coding units (CUs) and/or coding nodes. Video blocks in an intra-coded (I) slice of a picture are encoded using spatial prediction with respect to reference samples in neighboring blocks in the same picture. Video blocks in an inter-coded (P or B) slice of a picture may use spatial prediction with respect to reference samples in neighboring blocks in the same picture or temporal prediction with respect to reference samples in other reference pictures. Pictures may be referred to as frames, and reference pictures may be referred to a reference frames.

Spatial or temporal prediction results in a predictive block for a block to be coded. Residual data represents pixel differences between the original block to be coded and the predictive block. An inter-coded block is encoded according to a motion vector that points to a block of reference samples forming the predictive block, and the residual data indicating the difference between the coded block and the predictive block. An intra-coded block is encoded according to an intra-coding mode and the residual data. For further compression, the residual data may be transformed from the pixel domain to a transform domain, resulting in residual transform coefficients, which then may be quantized. The quantized transform coefficients, initially arranged in a two-dimensional array, may be scanned in order to produce a one-dimensional vector of transform coefficients, and entropy coding may be applied to achieve even more compression.

Three-dimensional (3D) video is very desirable for a variety of application, but 3D video coding presents many challenges.

**SUMMARY**

This disclosure describes features and techniques applicable to three-dimensional (3D) video coding. In one example, a technique may include coding a texture view video block, and coding a depth view video block, wherein the depth view video block is associated with the texture view video block. Coding the depth view video block may include coding a syntax element to indicate whether or not motion information associated with the texture view video block is adopted as motion information associated with the depth view video block.

The described techniques may correspond to a coding mode referred to herein as an inside view motion prediction (IMVP) mode. In this case, a depth view component (e.g., the depth view video block) may not include any additional delta values with respect to its motion information, and instead, may adopt the motion information of a texture view component as its motion information. By defining a mode that fully adopts motion information of a texture view as the motion information of a depth view, without any signaling of delta values with respect to such motion information, improved compression may be achieved.

In another example, this disclosure describes a device that codes 3D video data, wherein the device comprises one or more processors configured to code a texture view video block, and code a depth view video block, wherein the depth view video block is associated with the texture view video block. Coding the depth view video block includes coding a syntax element to indicate whether or not motion information associated with the texture view video block is adopted as motion information associated with the depth view video block.

In another example, this disclosure describes a computer-readable storage medium comprising instructions stored thereon, wherein the instructions upon execution cause one or more processors to code a texture view video block, and code a depth view video block, wherein the depth view video block is associated with the texture view video block. Coding the depth view video block includes coding a syntax element to indicate whether or not motion information associated with the texture view video block is adopted as motion information associated with the depth view video block.

In another example, this disclosure describes a device configured to code 3D video data, the device comprising means for coding a texture view video block, and means for coding a depth view video block, wherein the depth view video block is associated with the texture view video block, wherein the means for coding the depth view video block includes means for coding a syntax element to indicate whether or not motion information associated with the texture view video block is adopted as motion information associated with the depth view video block.

The details of one or more examples are set forth in the accompanying drawings and the description below. Other features, objects, and advantages will be apparent from the description and drawings, and from the claims.

## BRIEF DESCRIPTION OF DRAWINGS

FIG. 1 is a block diagram illustrating an example video encoding and decoding system that may utilize the techniques described in this disclosure.

FIG. 2 is a block diagram illustrating an example video encoder that may implement the techniques described in this disclosure.

FIG. 3 is a block diagram illustrating an example video decoder that may implement the techniques described in this disclosure.

FIG. 4 is a conceptual diagram illustrating a bit-stream order of video coding layer (VCL) network abstraction layer (NAL) units of view components inside one access unit.

FIG. 5 is a conceptual illustration of a sequence of pictures that form a video sequence, in which an identified macroblock in the 4-th picture of the depth view and the motion vector of the co-located MB in the 4-th picture of the texture view are reused in the depth view component.

FIG. 6 is a conceptual diagram showing a prediction structure that may be used by a three-dimensional video coding (3DVC) codec.

FIG. 7 is a conceptual diagram showing a prediction structure of the 3DVC codec that does not allow inter-view prediction for depth view components.

FIG. 8 is a conceptual diagram illustrating an example of asymmetric inter-view prediction, wherein both the left view (VL) and right view (VR) are with half-width.

FIG. 9 is a flow diagram illustrating a technique that may be performed by a video encoder consistent with this disclosure.

FIG. 10 is a flow diagram illustrating a technique that may be performed by a video decoder consistent with this disclosure.

## DETAILED DESCRIPTION

The techniques of this disclosure relate to three-dimensional (3D) video coding based on the ITU-T H.264/AVC standard and one or more extensions that support multi-view coding (MVC), such as Annex H of the ITU-T H.264/AVC standard. However, the techniques may also apply to other video coding standards or techniques, such as the emerging HEVC standard currently under development, extensions to the ITU-T H.264/AVC standard or the emerging HEVC standard, or proprietary video coding techniques such as On2 VP6/VP7/VP8.

In 3D video coding, there are often multiple different views that are collectively used to define a 3D video presentation. Moreover, each of the different views may include both a texture view component and a depth view component. The texture view components may be coded in blocks of video data, which are referred to as "video blocks" and commonly called "macroblocks" in the H.264 context. Similarly, the depth view components are also coded as "video blocks," and commonly called "macroblocks," in the H.264 standard. Each texture video block may have a corresponding depth view block. The different video blocks (texture and depth), however, are usually coded separately. Other video coding standards may refer to video blocks as treeblocks or coding units (CUs).

With inter coding, motion vectors (or motion vector difference values relative to a motion vector predictor) may be used to define predictive blocks, which are then used to predict the values of the coded video blocks. In this case, the so-called "residual values" or "difference values" are included in the encoded bitstream, along with the motion vectors (or motion vector difference values relative to a motion vector predictor) that identify the corresponding predictive blocks. The decoder receives the motion vectors and the residual values, and uses the motion vectors to identify the predictive blocks from previously decoded video data. To reconstruct the encoded video blocks, the decoder combines the residual values with the corresponding predictive blocks identified by the motion vectors.

There exist many potential problems with 3D video coding. For example, when coding multiview video data, the following problems may need to be solved to make an efficient codec:

1. Provide the ability for joint coding of the texture and depth components for one or more views;
2. Provide the ability to take advantage of the motion redundancy between texture and depth;
3. Provide the ability to transmit the camera parameters in a simple and efficient way;
4. In view adaptation, inter_view_flag may be used to discard a view component if it does not belong to a view that is being used for output. However, in the asymmetric 3DV case, a network abstraction layer (NAL) unit might still be needed for the prediction of the views with different resolution even if this flag is equal to 0.

To solve the above problems, several techniques may be used, including the following:

1. A framework to support the joint coding of depth and texture views.
2. A new inside view motion prediction (IVMP) mode can be used at macroblock (or other video block or CU) level to enable the reuse of the motion vectors between depth and texture views. Aspects of an IVMP mode are described in detail in this disclosure.
3. Camera parameters and depth ranges may be added into a sequence parameter set (SPS) or as new supplemental enhancement information (SEI) messages, and if such parameters vary in a picture basis, a VPS (view parameter set) or SEI message may be added.
4. The semantics of inter_view_flag may be modified or a new syntax element may be defined in the network abstraction layer (NAL) unit header to indicate if a view component that is not discardable for a view with different resolution also is discardable for a view with the same resolution.
5. In addition to the nal_unit_type (e.g., 21) to be used by the depth view component, one example further includes a new nal_unit_type (e.g., 22) for the texture view components that are not compatible to H.264/MVC.

This disclosure may use the following definitions.

**view component:** A *coded representation* of a *view* in a single *access unit.* When a view includes both coded texture and depth representations, a view component consists of a texture view component and a depth view component.

**texture view component:** A *coded representation* of the texture of a view in a single *access unit.*

**depth view component:** A *coded representation* of the depth of a view in a single *access unit.*

The coded video coding layer (VCL) network abstraction layer (NAL) units in a depth view component may be assigned nal_unit_type 21, as a new type of coded slice extension specifically for depth view components. The texture view component and depth view component may also be referred to herein as a texture view video block and a depth view video block.

An exemplary bit-stream order will now be described. In some examples, in each view component, any coded slice NAL unit (with nal_unit_type 21) of the depth view component must follow all coded slice NAL units of the texture view component. For simplicity, this disclosure may name the coded slice NAL units of the depth view component as depth NAL units.

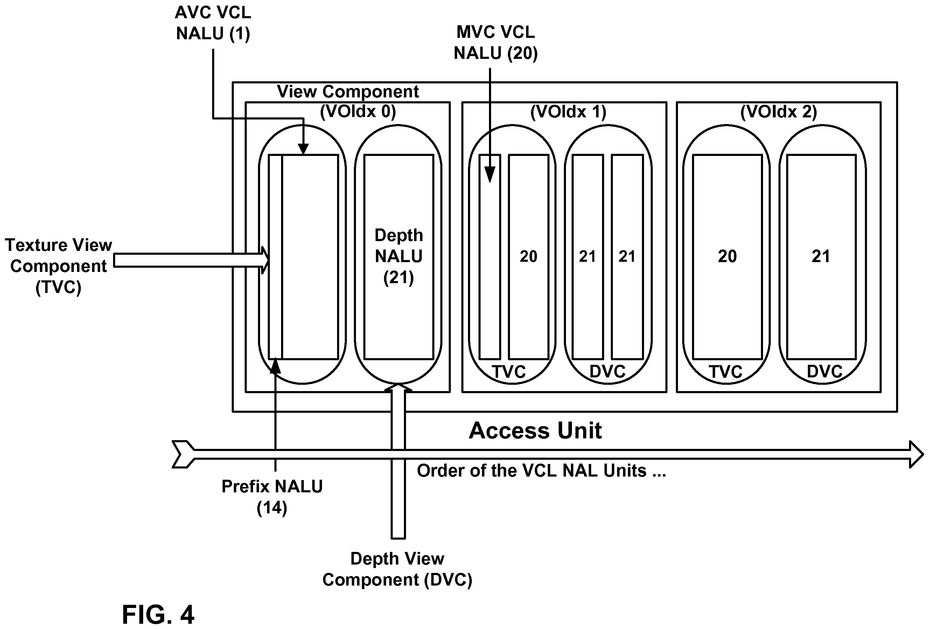

A depth NAL unit may have the same NAL unit header structure as the NAL unit with nal_unit_type equal to 20. FIG. 4 is a conceptual diagram illustrating a bit-stream order of the VCL NAL units of the view components inside one access unit.

As shown in FIG. 4, in accordance with this disclosure, an access unit contains multiple NAL units with multiple view components. Each view component may consist of one texture view component and one depth view component. The texture view component of the base view, with view order index (VOIdx) equal to 0, contains one prefix NAL unit (with NAL unit type equal to 14) and one or more AVC VCL NAL units (with NAL unit type equal to e.g., 1 or 5). Texture view components in other views contain only the MVC VCL NAL units (with NAL unit type equal to 20). In both base view and non-base views, the depth view components contain the depth NAL units with NAL unit type equal to 21. In any view component, the depth NAL units follow the NAL units of the texture view component in decoding/bitstream order.

Since the texture view component and its associated depth view component have similar object silhouette, they commonly have similar object boundary and movement. Thus, there is redundancy in their motion fields. A texture view block and a depth view block may be "associated" if they exist in the same NAL unit and/or if they correspond to a same (or overlapping) spatial and/or temporal instance of 3D video data. The techniques of this disclosure may exploit this redundancy to a large extent by allowing a mode in which the depth view component fully adopts the motion information of the associated texture view component, in a manner similar to a so-called "merge" mode. In this case, the depth view component may not include any additional delta values with respect to its motion information, and instead, may adopt the motion information of the texture view component as its motion information. By defining a mode that fully adopts motion information of a texture view as the motion information of a depth view, without any signaling of delta values with respect to such motion information, improved compression may be achieved.

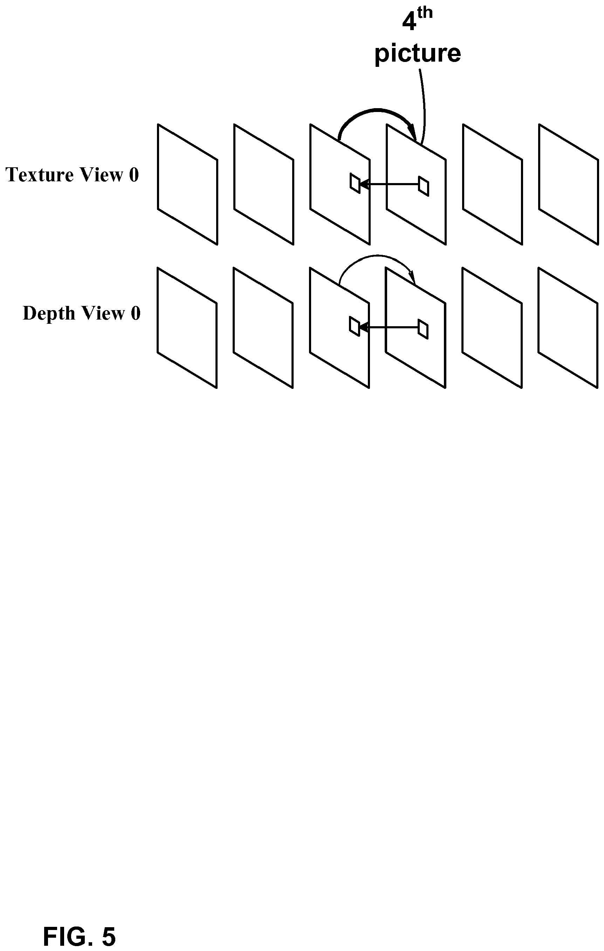

In particular, motion prediction from a texture view component to the associated depth view component may be enabled in accordance with a new mode that merges the motion information of the texture view as that of the depth view. In some examples, this so-called inside view motion prediction (IVMP) mode may be enabled only for Inter coded MBs with depth view components. In IVMP mode, the motion information, including mb_type, sub_mb_type, reference indices and motion vectors of the co-located MB in the texture view component, is reused by the depth view component of the same view. A flag may be signaled in each MB to indicate whether it uses the IVMP mode. In other words, the flag may be defined at a video block level, e.g., the macroblock level. The flag may be included with depth video blocks (e.g., depth macroblocks). As shown in FIG. 5, the flag may be true for the identified MB in the 4-th picture of the depth view and the motion vector of the co-located MB in the 4-th picture of the texture view (identified as the 4th picture) is reused for the highlighted MB in the depth view component. Note that, in some examples, the IVMP mode applies only to non-anchor pictures.

Again, relative to techniques that predict a motion vector for one view based on the motion of another view, the techniques of this disclosure may achieve further compression. For example, some scalable video coding (SVC) techniques may allow for motion prediction of an enhancement view based on the motion information of a base view, and in some cases, the base view may be a texture view and the enhancement view may be a depth view. In such cases, however, motion vector difference data (e.g., a delta) is always coded in addition to the prediction information (or flag) that indicates that the base view is used to predict the enhancement view. In contrast the techniques of this disclosure may utilize an IVMP mode in which no delta information (e.g., no motion vector difference value) is coded or allowed. Instead, with the IVMP mode, the motion information of the texture view is adopted as the motion information of the depth view.

When the motion information of the texture view is adopted as the motion information of the depth view, then the decoder can use the motion information of the texture view (e.g. a texture block) to decode the depth view (e.g., a corresponding depth block) without receiving or decoding any other motion information for the depth view. In particular, the decoder can be configured to interpret an IVMP flag in this manner. Thus, motion information may be excluded from a depth video block when the IVMP flag is enabled, and the decoder can be configured to know that the enabled IVMP flag means that the motion information for the depth video block can be obtained from the corresponding texture video block.

An encoder consistent with this disclosure may generally conform to the joint multiview video coding (JMVC) encoder scheme, wherein views are encoded one by one. Inside each view, the texture sequence is firstly encoded, and the depth sequence is then encoded.

When IVMP mode is enabled, during texture view component encoding, the motion field of each texture view component is written into a motion file, the name of which can be specified in a configure file. When encoding the associated depth sequence of the same view, the motion file can be read for reference.

The decoder may be similar to a JMVC decoder, in some aspects, with the modification of also decoding and outputting a depth sequence for each view. When IVMP mode is enabled, the motion of each texture view component is stored and adopted as the motion of each corresponding depth view. For any blocks in which the IVMP mode is disabled, the depth view may include its own motion information, or may include some other syntax elements to identify where to obtain, predict and/or adopt its respective motion information. If IVMP mode is enabled, however, the depth view does not include its own motion information, and the motion information is obtained by a decoder from the corresponding texture view component. Thus, when the IVMP mode is enabled, the depth view video block adopts the motion information of the corresponding texture view video block so that the depth view video block does not include its own motion information.

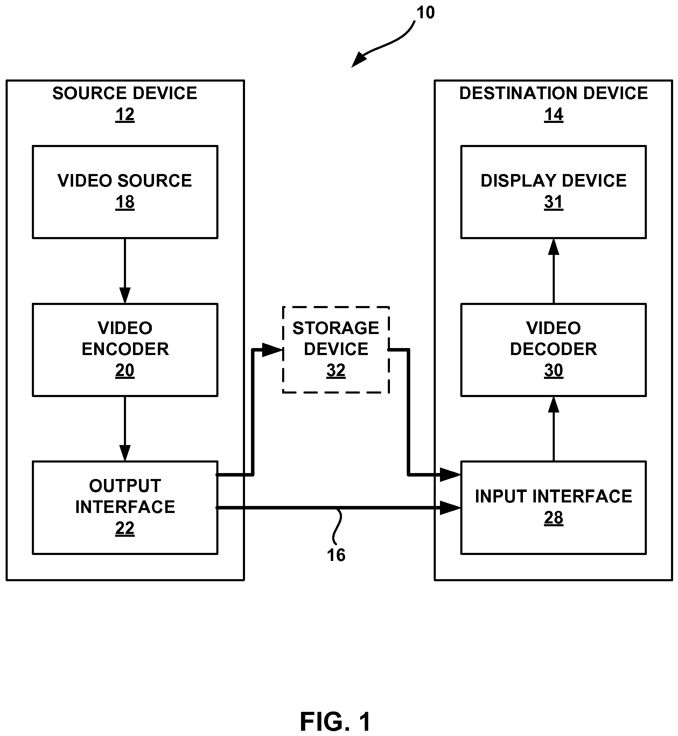

The following discussion of FIGS. 1, 2 and 3 describe some exemplary scenarios where the MVC-based 3DVC techniques of this disclosure may be used.

FIG. 1 is a block diagram illustrating an example video encoding and decoding system 10 that may utilize the techniques described in this disclosure. As shown in FIG. 1, system 10 includes a source device 12 that generates encoded video data to be decoded at a later time by a destination device 14. Source device 12 and destination device 14 may comprise any of a wide range of devices, including desktop computers, notebook (i.e., laptop) computers, tablet computers, set-top boxes, telephone handsets such as so-called "smart" phones, so-called "smart" pads, televisions, cameras, display devices, digital media players, video gaming consoles, video streaming device, or the like. In some cases, source device 12 and destination device 14 may be equipped for wireless communication.

Destination device 14 may receive the encoded video data to be decoded via a link 16. Link 16 may comprise any type of medium or device capable of moving the encoded video data from source device 12 to destination device 14. In one example, link 16 may comprise a communication medium to enable source device 12 to transmit encoded video data directly to destination device 14 in real-time. The encoded video data may be modulated according to a communication standard, such as a wireless communication protocol, and transmitted to destination device 14. The communication medium may comprise any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from source device 12 to destination device 14.

Alternatively, encoded data may be output from output interface 22 to a storage device 32. Similarly, encoded data may be accessed from storage device 32 by input interface. Storage device 32 may include any of a variety of distributed or locally accessed data storage media such as a hard drive, Blu-ray discs, DVDs, CD-ROMs, flash memory, volatile or non-volatile memory, or any other suitable digital storage media for storing encoded video data. In a further example, storage device 32 may correspond to a file server or another intermediate storage device that may hold the encoded video generated by source device 12. Destination device 14 may access stored video data from storage device 32 via streaming or download. The file server may be any type of server capable of storing encoded video data and transmitting that encoded video data to the destination device 14. Example file servers include a web server (e.g., for a website), an FTP server, network attached storage (NAS) devices, or a local disk drive. Destination device 14 may access the encoded video data through any standard data connection, including an Internet connection. This may include a wireless channel (e.g., a Wi-Fi connection), a wired connection (e.g., DSL, cable modem, etc.), or a combination of both that is suitable for accessing encoded video data stored on a file server. The transmission of encoded video data from storage device 32 may be a streaming transmission, a download transmission, or a combination of both.

The techniques of this disclosure are not necessarily limited to wireless applications or settings. The techniques may be applied to video coding in support of any of a variety of multimedia applications, such as over-the-air television broadcasts, cable television transmissions, satellite television transmissions, streaming video transmissions, e.g., via the Internet, encoding of digital video for storage on a data storage medium, decoding of digital video stored on a data storage medium, or other applications. In some examples, system 10 may be configured to support one-way or two-way video transmission to support applications such as video streaming, video playback, video broadcasting, and/or video telephony.

In the example of FIG. 1, source device 12 includes a video source 18, video encoder 20 and an output interface 22. In some cases, output interface 22 may include a modulator/demodulator (modem) and/or a transmitter. In source device 12, video source 18 may include a source such as a video capture device, e.g., a video camera, a video archive containing previously captured video, a video feed interface to receive video from a video content provider, and/or a computer graphics system for generating computer graphics data as the source video, or a combination of such sources. As one example, if video source 18 is a video camera, source device 12 and destination device 14 may form so-called camera phones or video phones. However, the techniques described in this disclosure may be applicable to video coding in general, and may be applied to wireless and/or wired applications.

The captured, pre-captured, or computer-generated video may be encoded by video encoder 12. The encoded video data may be transmitted directly to destination device 14 via output interface 22 of source device 20. The encoded video data may also (or alternatively) be stored onto storage device 32 for later access by destination device 14 or other devices, for decoding and/or playback.

Destination device 14 includes an input interface 28, a video decoder 30, and a display device 31. In some cases, input interface 28 may include a receiver and/or a modem. Input interface 28 of destination device 14 receives the encoded video data over link 16. The encoded video data communicated over link 16, or provided on storage device 32, may include a variety of syntax elements generated by video encoder 20 for use by a video decoder, such as video decoder 30, in decoding the video data. Such syntax elements may be included with the encoded video data transmitted on a communication medium, stored on a storage medium, or stored a file server.

Display device 31 may be integrated with, or external to, destination device 14. In some examples, destination device 14 may include an integrated display device and also be configured to interface with an external display device. In other examples, destination device 14 may be a display device. In general, display device 31 displays the decoded video data to a user, and may comprise any of a variety of display devices such as a liquid crystal display (LCD), a plasma display, an organic light emitting diode (OLED) display, or another type of display device.

Video encoder 20 and video decoder 30 may operate according to a video compression standard, such as the High Efficiency Video Coding (HEVC) standard presently under development, and may conform to the HEVC Test Model (HM). Alternatively, video encoder 20 and video decoder 30 may operate according to other proprietary or industry standards, such as the ITU-T H.264 standard, alternatively referred to as MPEG-4, Part 10, Advanced Video Coding (AVC), or extensions of such standards. The techniques of this disclosure, however, are not limited to any particular coding standard. Other examples of video compression standards include MPEG-2 and ITU-T H.263. Proprietary coding techniques, such as those referred to as On2 VP6/VP7/VP8, may also implement one or more of the techniques described herein.

Although not shown in FIG. 1, in some aspects, video encoder 20 and video decoder 30 may each be integrated with an audio encoder and decoder, and may include appropriate MUX-DEMUX units, or other hardware and software, to handle encoding of both audio and video in a common data stream or separate data streams. If applicable, in some examples, MUX-DEMUX units may conform to the ITU H.223 multiplexer protocol, or other protocols such as the user datagram protocol (UDP).

Video encoder 20 and video decoder 30 each may be implemented as any of a variety of suitable encoder circuitry, such as one or more microprocessors, digital signal processors (DSPs), application specific integrated circuits (ASICs), field programmable gate arrays (FPGAs), discrete logic, software, hardware, firmware or any combinations thereof. When the techniques are implemented partially in software, a device may store instructions for the software in a suitable, non-transitory computer-readable medium and execute the instructions in hardware using one or more processors to perform the techniques of this disclosure. Each of video encoder 20 and video decoder 30 may be included in one or more encoders or decoders, either of which may be integrated as part of a combined encoder/decoder (CODEC) in a respective device.

The JCT-VC is working on development of the HEVC standard. The HEVC standardization efforts are based on an evolving model of a video coding device referred to as the HEVC Test Model (HM). The HM presumes several additional capabilities of video coding devices relative to existing devices according to, e.g., ITU-T H.264/AVC. For example, whereas H.264 provides nine intra-prediction encoding modes, the HM may provide as many as thirty-three intra-prediction encoding modes.

In general, the working model of the HM describes that a video frame or picture may be divided into a sequence of treeblocks or largest coding units (LCU) that include both luma and chroma samples. A treeblock has a similar purpose as a macroblock of the H.264 standard. A slice includes a number of consecutive treeblocks in coding order. A video frame or picture may be partitioned into one or more slices. Each treeblock may be split into coding units (CUs) according to a quadtree. For example, a treeblock, as a root node of the quadtree, may be split into four child nodes, and each child node may in turn be a parent node and be split into another four child nodes. A final, unsplit child node, as a leaf node of the quadtree, comprises a coding node, i.e., a coded video block. Syntax data associated with a coded bitstream may define a maximum number of times a treeblock may be split, and may also define a minimum size of the coding nodes. Treeblocks may be referred to as LCUs in some examples.

A CU includes a coding node and prediction units (PUs) and transform units (TUs) associated with the coding node. A size of the CU corresponds to a size of the coding node and must be square in shape. The size of the CU may range from 8x8 pixels up to the size of the treeblock with a maximum of 64x64 pixels or greater. Each CU may contain one or more PUs and one or more TUs. Syntax data associated with a CU may describe, for example, partitioning of the CU into one or more PUs. Partitioning modes may differ between whether the CU is skip or direct mode encoded, intra-prediction mode encoded, or inter-prediction mode encoded. PUs may be partitioned to be non-square in shape. Syntax data associated with a CU may also describe, for example, partitioning of the CU into one or more TUs according to a quadtree. A TU can be square or non-square in shape.

The HEVC standard allows for transformations according to TUs, which may be different for different CUs. The TUs are typically sized based on the size of PUs within a given CU defined for a partitioned LCU, although this may not always be the case. The TUs are typically the same size or smaller than the PUs. In some examples, residual samples corresponding to a CU may be subdivided into smaller units using a quadtree structure known as "residual quad tree" (RQT). The leaf nodes of the RQT may be referred to as transform units (TUs). Pixel difference values associated with the TUs may be transformed to produce transform coefficients, which may be quantized.

In general, a PU includes data related to the prediction process. For example, when the PU is intra-mode encoded, the PU may include data describing an intra-prediction mode for the PU. As another example, when the PU is inter-mode encoded, the PU may include data defining a motion vector for the PU. The data defining the motion vector for a PU may describe, for example, a horizontal component of the motion vector, a vertical component of the motion vector, a resolution for the motion vector (e.g., one-quarter pixel precision or one-eighth pixel precision), a reference picture to which the motion vector points, and/or a reference picture list (e.g., List 0, List 1, or List C) for the motion vector.

In general, a TU is used for the transform and quantization processes. A given CU having one or more PUs may also include one or more transform units (TUs). Following prediction, video encoder 20 may calculate residual values corresponding to the PU. The residual values comprise pixel difference values that may be transformed into transform coefficients, quantized, and scanned using the TUs to produce serialized transform coefficients for entropy coding. This disclosure typically uses the term "video block" to refer to a coding node of a CU. In some specific cases, this disclosure may also use the term "video block" to refer to a treeblock, i.e., LCU, or a CU, which includes a coding node and PUs and TUs.

A video sequence typically includes a series of video frames or pictures. A group of pictures (GOP) generally comprises a series of one or more of the video pictures. A GOP may include syntax data in a header of the GOP, a header of one or more of the pictures, or elsewhere, that describes a number of pictures included in the GOP. Each slice of a picture may include slice syntax data that describes an encoding mode for the respective slice. Video encoder 20 typically operates on video blocks within individual video slices in order to encode the video data. A video block may correspond to a coding node within a CU. The video blocks may have fixed or varying sizes, and may differ in size according to a specified coding standard.

As an example, the HM supports prediction in various PU sizes. Assuming that the size of a particular CU is 2Nx2N, the HM supports intra-prediction in PU sizes of 2Nx2N or NxN, and inter-prediction in symmetric PU sizes of 2Nx2N, 2NxN, Nx2N, or NxN. The HM also supports asymmetric partitioning for inter-prediction in PU sizes of 2NxnU, 2NxnD, nLx2N, and nRx2N. In asymmetric partitioning, one direction of a CU is not partitioned, while the other direction is partitioned into 25% and 75%. The portion of the CU corresponding to the 25% partition is indicated by an "n" followed by an indication of "Up", "Down," "Left," or "Right." Thus, for example, "2NxnU" refers to a 2Nx2N CU that is partitioned horizontally with a 2Nx0.5N PU on top and a 2Nx1.5N PU on bottom.

In this disclosure, "NxN" and "N by N" may be used interchangeably to refer to the pixel dimensions of a video block in terms of vertical and horizontal dimensions, e.g., 16x16 pixels or 16 by 16 pixels. In general, a 16x16 block will have 16 pixels in a vertical direction (y = 16) and 16 pixels in a horizontal direction (x = 16). Likewise, an NxN block generally has N pixels in a vertical direction and N pixels in a horizontal direction, where N represents a nonnegative integer value. The pixels in a block may be arranged in rows and columns. Moreover, blocks need not necessarily have the same number of pixels in the horizontal direction as in the vertical direction. For example, blocks may comprise NxM pixels, where M is not necessarily equal to N.

Following intra-predictive or inter-predictive coding using the PUs of a CU, video encoder 20 may calculate residual data for the TUs of the CU. The PUs may comprise pixel data in the spatial domain (also referred to as the pixel domain) and the TUs may comprise coefficients in the transform domain following application of a transform, e.g., a discrete cosine transform (DCT), an integer transform, a wavelet transform, or a conceptually similar transform to residual video data. The residual data may correspond to pixel differences between pixels of the unencoded picture and prediction values corresponding to the PUs. Video encoder 20 may form the TUs including the residual data for the CU, and then transform the TUs to produce transform coefficients for the CU.

Following any transforms to produce transform coefficients, video encoder 20 may perform quantization of the transform coefficients. Quantization generally refers to a process in which transform coefficients are quantized to possibly reduce the amount of data used to represent the coefficients, providing further compression. The quantization process may reduce the bit depth associated with some or all of the coefficients. For example, an $n$-bit value may be rounded down to an $m$-bit value during quantization, where $n$ is greater than $m$.

In some examples, video encoder 20 may utilize a predefined scan order to scan the quantized transform coefficients to produce a serialized vector that can be entropy encoded. In other examples, video encoder 20 may perform an adaptive scan. After scanning the quantized transform coefficients to form a one-dimensional vector, video encoder 20 may entropy encode the one-dimensional vector, e.g., according to context adaptive variable length coding (CAVLC), context adaptive binary arithmetic coding (CABAC), syntax-based context-adaptive binary arithmetic coding (SBAC), Probability Interval Partitioning Entropy (PIPE) coding or another entropy encoding methodology. Video encoder 20 may also entropy encode syntax elements associated with the encoded video data for use by video decoder 30 in decoding the video data.

To perform CABAC, video encoder 20 may assign a context within a context model to a symbol to be transmitted. The context may relate to, for example, whether neighboring values of the symbol are non-zero or not. To perform CAVLC, video encoder 20 may select a variable length code for a symbol to be transmitted. Codewords in VLC may be constructed such that relatively shorter codes correspond to more probable symbols, while longer codes correspond to less probable symbols. In this way, the use of VLC may achieve a bit savings over, for example, using equal-length codewords for each symbol to be transmitted. The probability determination may be based on a context assigned to the symbol.

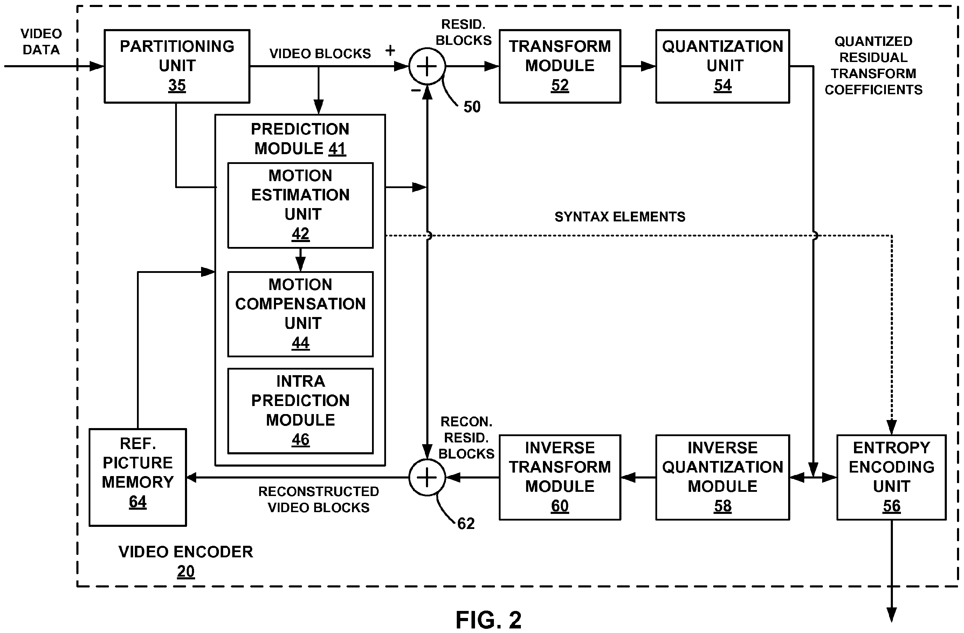

FIG. 2 is a block diagram illustrating an example video encoder 20 that may implement the techniques described in this disclosure. Video encoder 20 may perform intra- and inter-coding of video blocks within video slices. Intra-coding relies on spatial prediction to reduce or remove spatial redundancy in video within a given video frame or picture. Inter-coding relies on temporal prediction to reduce or remove temporal redundancy in video within adjacent frames or pictures of a video sequence. Intra-mode (I mode) may refer to any of several spatial based compression modes. Inter-modes, such as uni-directional prediction (P mode) or bi-prediction (B mode), may refer to any of several temporal-based compression modes.

In the example of FIG. 2, video encoder 20 includes a partitioning unit 35, prediction module 41, reference picture memory 64, summer 50, transform module 52, quantization unit 54, and entropy encoding unit 56. Prediction module 41 includes motion estimation unit 42, motion compensation unit 44, and intra prediction module 46. For video block reconstruction, video encoder 20 also includes inverse quantization unit 58, inverse transform module 60, and summer 62. A deblocking filter (not shown in FIG. 2) may also be included to filter block boundaries to remove blockiness artifacts from reconstructed video. If desired, the deblocking filter would typically filter the output of summer 62. Additional loop filters (in loop or post loop) may also be used in addition to the deblocking filter.

As shown in FIG. 2, video encoder 20 receives video data, and partitioning unit 35 partitions the data into video blocks. This partitioning may also include partitioning into slices, tiles, or other larger units, as wells as video block partitioning, e.g., according to a quadtree structure of LCUs and CUs. Video encoder 20 generally illustrates the components that encode video blocks within a video slice to be encoded. The slice may be divided into multiple video blocks (and possibly into sets of video blocks referred to as tiles). Prediction module 41 may select one of a plurality of possible coding modes, such as one of a plurality of intra coding modes or one of a plurality of inter coding modes, for the current video block based on error results (e.g., coding rate and the level of distortion). Prediction module 41 may provide the resulting intra- or inter-coded block to summer 50 to generate residual block data and to summer 62 to reconstruct the encoded block for use as a reference picture.

Intra prediction module 46 within prediction module 41 may perform intra-predictive coding of the current video block relative to one or more neighboring blocks in the same frame or slice as the current block to be coded to provide spatial compression. Motion estimation unit 42 and motion compensation unit 44 within prediction module 41 perform inter-predictive coding of the current video block relative to one or more predictive blocks in one or more reference pictures to provide temporal compression.

Motion estimation unit 42 may be configured to determine the inter-prediction mode for a video slice according to a predetermined pattern for a video sequence. The predetermined pattern may designate video slices in the sequence as P slices, B slices or GPB slices. Motion estimation unit 42 and motion compensation unit 44 may be highly integrated, but are illustrated separately for conceptual purposes. Motion estimation, performed by motion estimation unit 42, is the process of generating motion vectors, which estimate motion for video blocks. A motion vector, for example, may indicate the displacement of a PU of a video block within a current video frame or picture relative to a predictive block within a reference picture.

A predictive block is a block that is found to closely match the PU of the video block to be coded in terms of pixel difference, which may be determined by sum of absolute difference (SAD), sum of square difference (SSD), or other difference metrics. In some examples, video encoder 20 may calculate values for sub-integer pixel positions of reference pictures stored in reference picture memory 64. For example, video encoder 20 may interpolate values of one-quarter pixel positions, one-eighth pixel positions, or other fractional pixel positions of the reference picture. Therefore, motion estimation unit 42 may perform a motion search relative to the full pixel positions and fractional pixel positions and output a motion vector with fractional pixel precision.

Motion estimation unit 42 calculates a motion vector for a PU of a video block in an inter-coded slice by comparing the position of the PU to the position of a predictive block of a reference picture. The reference picture may be selected from a first reference picture list (List 0) or a second reference picture list (List 1), each of which identify one or more reference pictures stored in reference picture memory 64. Motion estimation unit 42 sends the calculated motion vector to entropy encoding unit 56 and motion compensation unit 44.

Motion compensation, performed by motion compensation unit 44, may involve fetching or generating the predictive block based on the motion vector determined by motion estimation, possibly performing interpolations to sub-pixel precision. Upon receiving the motion vector for the PU of the current video block, motion compensation unit 44 may locate the predictive block to which the motion vector points in one of the reference picture lists. Video encoder 20 forms a residual video block by subtracting pixel values of the predictive block from the pixel values of the current video block being coded, forming pixel difference values. The pixel difference values form residual data for the block, and may include both luma and chroma difference components. Summer 50 represents the component or components that perform this subtraction operation. Motion compensation unit 44 may also generate syntax elements associated with the video blocks and the video slice for use by video decoder 30 in decoding the video blocks of the video slice.

Intra-prediction module 46 may intra-predict a current block, as an alternative to the inter-prediction performed by motion estimation unit 42 and motion compensation unit 44, as described above. In particular, intra-prediction module 46 may determine an intra-prediction mode to use to encode a current block. In some examples, intra-prediction module 46 may encode a current block using various intra-prediction modes, e.g., during separate encoding passes, and intra-prediction module 46 (or mode select unit 40, in some examples) may select an appropriate intra-prediction mode to use from the tested modes. For example, intra-prediction module 46 may calculate rate-distortion values using a rate-distortion analysis for the various tested intra-prediction modes, and select the intra-prediction mode having the best rate-distortion characteristics among the tested modes. Rate-distortion analysis generally determines an amount of distortion (or error) between an encoded block and an original, unencoded block that was encoded to produce the encoded block, as well as a bit rate (that is, a number of bits) used to produce the encoded block. Intra-prediction module 46 may calculate ratios from the distortions and rates for the various encoded blocks to determine which intra-prediction mode exhibits the best rate-distortion value for the block.

In some cases, prediction module 41 may select the IVMP mode for coding one or more depth video blocks. In this case, the motion information for a corresponding texture video block may be adopted for a depth block as described herein. The depth block and the texture block may be coded into the same NAL unit, and an IVMP flag may be encoded so that a decoder can properly decode the depth video block by reusing the motion information of the corresponding texture view video block.

In any case, after selecting an intra-prediction mode for a block, intra-prediction module 46 may provide information indicative of the selected intra-prediction mode for the block to entropy encoding unit 56. Entropy encoding unit 56 may encode the information indicating the selected intra-prediction mode in accordance with the techniques of this disclosure. Video encoder 20 may include in the transmitted bitstream configuration data, which may include a plurality of intra-prediction mode index tables and a plurality of modified intra-prediction mode index tables (also referred to as codeword mapping tables), definitions of encoding contexts for various blocks, and indications of a most probable intra-prediction mode, an intra-prediction mode index table, and a modified intra-prediction mode index table to use for each of the contexts.

After prediction module 41 generates the predictive block for the current video block via either inter-prediction or intra-prediction, video encoder 20 forms a residual video block by subtracting the predictive block from the current video block. The residual video data in the residual block may be included in one or more TUs and applied to transform module 52. Transform module 52 transforms the residual video data into residual transform coefficients using a transform, such as a discrete cosine transform (DCT) or a conceptually similar transform. Transform module 52 may convert the residual video data from a pixel domain to a transform domain, such as a frequency domain.

Transform module 52 may send the resulting transform coefficients to quantization unit 54. Quantization unit 54 quantizes the transform coefficients to further reduce bit rate. The quantization process may reduce the bit depth associated with some or all of the coefficients. The degree of quantization may be modified by adjusting a quantization parameter. In some examples, quantization unit 54 may then perform a scan of the matrix including the quantized transform coefficients. Alternatively, entropy encoding unit 56 may perform the scan.

Following quantization, entropy encoding unit 56 entropy encodes the quantized transform coefficients. For example, entropy encoding unit 56 may perform context adaptive variable length coding (CAVLC), context adaptive binary arithmetic coding (CABAC), syntax-based context-adaptive binary arithmetic coding (SBAC), probability interval partitioning entropy (PIPE) coding or another entropy encoding methodology or technique. Following the entropy encoding by entropy encoding unit 56, the encoded bitstream may be transmitted to video decoder 30, or archived for later transmission or retrieval by video decoder 30. Entropy encoding unit 56 may also entropy encode the motion vectors and the other syntax elements for the current video slice being coded.

Inverse quantization unit 58 and inverse transform module 60 apply inverse quantization and inverse transformation, respectively, to reconstruct the residual block in the pixel domain for later use as a reference block of a reference picture. Motion compensation unit 44 may calculate a reference block by adding the residual block to a predictive block of one of the reference pictures within one of the reference picture lists. Motion compensation unit 44 may also apply one or more interpolation filters to the reconstructed residual block to calculate sub-integer pixel values for use in motion estimation. Summer 62 adds the reconstructed residual block to the motion compensated prediction block produced by motion compensation unit 44 to produce a reference block for storage in reference picture memory 64. The reference block may be used by motion estimation unit 42 and motion compensation unit 44 as a reference block to inter-predict a block in a subsequent video frame or picture.

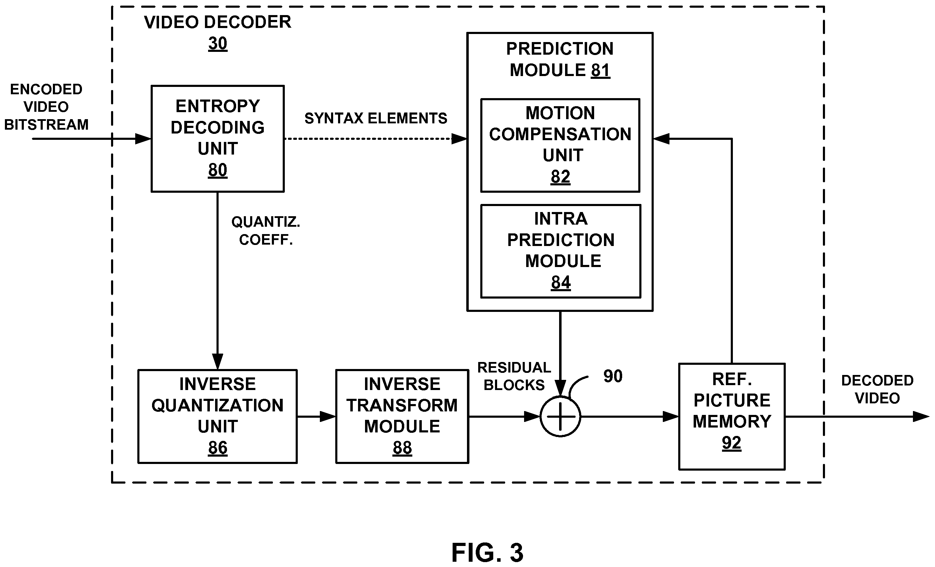

FIG. 3 is a block diagram illustrating an example video decoder 30 that may implement the techniques described in this disclosure. In the example of FIG. 3, video decoder 30 includes an entropy decoding unit 80, prediction module 81, inverse quantization unit 86, inverse transformation unit 88, summer 90, and reference picture memory 92. Prediction module 81 includes motion compensation unit 82 and intra prediction module 84. Video decoder 30 may, in some examples, perform a decoding pass generally reciprocal to the encoding pass described with respect to video encoder 20 from FIG. 2.

During the decoding process, video decoder 30 receives an encoded video bitstream that represents video blocks of an encoded video slice and associated syntax elements from video encoder 20. Entropy decoding unit 80 of video decoder 30 entropy decodes the bitstream to generate quantized coefficients, motion vectors, and other syntax elements. Entropy decoding unit 80 forwards the motion vectors and other syntax elements to prediction module 81. Video decoder 30 may receive the syntax elements at the video slice level and/or the video block level.

When the video slice is coded as an intra-coded (I) slice, intra prediction module 84 of prediction module 81 may generate prediction data for a video block of the current video slice based on a signaled intra prediction mode and data from previously decoded blocks of the current frame or picture. When the video frame is coded as an inter-coded (i.e., B, P or GPB) slice, motion compensation unit 82 of prediction module 81 produces predictive blocks for a video block of the current video slice based on the motion vectors and other syntax elements received from entropy decoding unit 80. The predictive blocks may be produced from one of the reference pictures within one of the reference picture lists. Video decoder 30 may construct the reference frame lists, List 0 and List 1, using default construction techniques based on reference pictures stored in reference picture memory 92.

Motion compensation unit 82 determines prediction information for a video block of the current video slice by parsing the motion vectors and other syntax elements, and uses the prediction information to produce the predictive blocks for the current video block being decoded. For example, motion compensation unit 82 uses some of the received syntax elements to determine a prediction mode (e.g., intra- or inter-prediction) used to code the video blocks of the video slice, an inter-prediction slice type (e.g., B slice, P slice, or GPB slice), construction information for one or more of the reference picture lists for the slice, motion vectors for each inter-encoded video block of the slice, inter-prediction status for each inter-coded video block of the slice, and other information to decode the video blocks in the current video slice.

In some cases, prediction module 81 may interpret a flag in a NAL unit and select the IVMP mode for decoding one or more depth video blocks of the NAL unit. In this case, the motion information for a corresponding texture video block may be adopted for a depth block as described herein. The depth block and the texture block may be coded into the same NAL unit, and an IVMP flag may be decoded from the biststream so that video decoder 30 can properly decode the depth video block by reusing the motion information of the corresponding texture view video block.

Motion compensation unit 82 may also perform interpolation based on interpolation filters. Motion compensation unit 82 may use interpolation filters as used by video encoder 20 during encoding of the video blocks to calculate interpolated values for sub-integer pixels of reference blocks. In this case, motion compensation unit 82 may determine the interpolation filters used by video encoder 20 from the received syntax elements and use the interpolation filters to produce predictive blocks.

Inverse quantization unit 86 inverse quantizes, i.e., de-quantizes, the quantized transform coefficients provided in the bitstream and decoded by entropy decoding unit 80. The inverse quantization process may include use of a quantization parameter calculated by video encoder 20 for each video block in the video slice to determine a degree of quantization and, likewise, a degree of inverse quantization that should be applied. Inverse transform module 88 applies an inverse transform, e.g., an inverse DCT, an inverse integer transform, or a conceptually similar inverse transform process, to the transform coefficients in order to produce residual blocks in the pixel domain.

After prediction module 81 generates the predictive block for the current video block based on either inter- or intra-prediction, video decoder 30 forms a decoded video block by summing the residual blocks from inverse transform module 88 with the corresponding predictive blocks generated by prediction module 81. Summer 90 represents the component or components that perform this summation operation. If desired, a deblocking filter may also be applied to filter the decoded blocks in order to remove blockiness artifacts. Other loop filters (either in the coding loop or after the coding loop) may also be used to smooth pixel transitions, or otherwise improve the video quality. The decoded video blocks in a given frame or picture are then stored in reference picture memory 92, which stores reference pictures used for subsequent motion compensation. Reference picture memory 92 also stores decoded video for later presentation on a display device, such as display device 31 of FIG. 100.

For 3D video coding, the texture view component and its associated depth view component may have similar object silhouette, and these different view components may have similar object boundary and movement. Thus, there is redundancy in motion fields of associated texture view components and depth view components. The techniques of this disclosure may exploit this redundancy to a larger extent than conventional techniques by allowing a mode in which the depth view component fully adopts the motion information of the texture view component, in a manner similar to a so-called "merge" mode. In this case, the depth view component may not include any additional delta values with respect to its motion information (i.e., may not include any motion vector difference value), and instead, may adopt the motion information of the texture view component as its motion information.

In particular, motion prediction from a texture view component to the associated depth view component may be enabled in accordance with a new mode that merges the motion information of the texture view as that of the depth view. In some examples, this so-called IVMP mode may be enabled only for Inter coded MBs with depth view components. In IVMP mode, the motion information, including mb_type, sub_mb_type, reference indices and motion vectors of the co-located MB in texture view component is reused by the depth view component of the same view. A flag may be signaled in each MB to indicate whether it uses the IVMP mode. As shown in FIG. 5, the flag may be true for the identified MB in the 4-th picture of the depth view and the motion vector of the co-located MB in the 4-th picture of the texture view (identified as the 4th picture) is reused for the highlighted MB in the depth view component. Note that, in some examples, the IVMP mode applies only to non-anchor pictures. The term "anchor picture" may be defined as any random access point (RAP) that is different from an instantaneous decoding refresh (IDR) picture.

As mentioned above, relative to conventional techniques that predict a motion vector for one view based on the motion of another view, the techniques of this disclosure may achieve further compression. For example, some conventional scalable techniques may allow for motion prediction of an enhancement view based on the motion information of a base view, and in some cases, the base view may be a texture view and the enhancement view may be a depth view. In such cases, however, a motion vector difference value (e.g., a delta) is always coded in addition to the prediction information (or flag) that indicates that the base view is used to predict the enhancement view. In contrast the techniques of this disclosure may utilize an IVMP mode in which no delta information is coded or allowed. Instead, with the IVMP mode, the motion information of the texture view is adopted as the motion information of the depth view.

Additional details of various signaling techniques, for signaling compressed video data, will now be described. A view parameter set (VPS) maybe signaled as "in-band" meaning that the parameter set is associated with the coded pictures and transmitted together in one channel or session. A VPS, if present in the Access Unit (AU), which is the coded representation of a time instance of the bitstream may need to precede any VCL NAL units. Multiple frames may have duplicated identical VPSs, to introduce the resiliency.

In some examples, the techniques of this disclosure may address an inver_view_flag, and may extend the semantics of inter_view_flag. In one example, an inter_view_flag equal to 0 specifies that the current view component is not used for inter-view prediction by any other view component in the current access unit with the same or different spatial resolution. In this example, inter_view_flag equal to 1 may specify that the current view component may be used for inter-view prediction by other view components in the current access unit.

The value of inter_view_flag may be the same for all VCL NAL units of a view component.

In one example, the left and right views are half resolution and center view is full resolution. In an Asymmetric 3DV profile, this flag may be set to 1, e.g., for the right view. However, if a MVC sub-bitstream is extracted, this flag does not have to be 1.

Defining a flag called **inter_asy_view_flag:**

| nal_unit_header_mvc_extension () { | C | Descriptor |
|---|---|---|
| non_idr_flag | All | u(1) |
| priority_id | All | u(6) |
| view_id | All | u(10) |
| temporal_id | All | u(3) |
| anchor_pic_flag | All | u(1) |
| **inter_asy_view-flag** | All | u(1) |
| reserved_one_bit | All | u(1) |
| } | All | u(1) |

In some examples, **inter_asy_view_flag** equal to 0 specifies that the current view component is not used for inter-view prediction by any other view component in the current access unit with a different spatial resolution. inter_asy_view_flag equal to 1 specifies that the current view component may be used for inter-view prediction by other view components with a different spatial resolution in the current access unit.

In the above example, for the left view, the NAL units can have inter_view_flag equal to 1 and inter_asy_view_flag equal to 1. For the right view, the NAL units can have inter_view_flag equal to 0 and inter_asy_view_flag equal to 1, and for the center view, all NAL units can have these two flags equal to 0.

This disclosure may provide a response to the call for proposal (CfP) on 3D Video Coding issued by MPEG. The proposal is based on the H.264/MVC reference software JMVC with several enhancements and additions, which may incorporate the joint coding of texture and depth for multiple views. The proposal of this disclosure may contain joint coding of texture and depth, prediction from texture to depth within a view, and asymmetric coding of view components with different resolutions. In the proposal, the MPEG view synthesis software may be used for view generation without any modification.

Compared to JMVC 8.3.1 anchor, for the 2-view case, the proposal of this disclosure may achieve rate reduction up to 22.6% (in average 11.7%) and for the 3-view case, rate reduction up to 15.8% (in average 7.3%) when the bitrates are the total bitrates of both texture and depth of the two views and the peak signal to noise ratio (PSNR) values are the average PSNR values of the two decoded texture views.

For the 2-view case, if the total bitrates versus the PSNR values of the synthesized view is used, the BD rate reduction is up to 24.7% (and 13.9% in average) and for the 3-view case, if the total bitrates versus the average PSNR values of the two synthesized views is used, the BD rate reduction is up to 19.0% (and 15.0% in average).

This disclosure may provide the following:

- Compatibility to both H.264/AVC High Profile and H.264/MVC Stereo High Profile, and potentially Multiview High Profile;
- Joint coding of texture and depth for multiview sequences;

- Symmetric spatial and temporal resolutions for the texture and depth view components of each view;
- Asymmetric spatial resolutions for different views.

Additional codec modifications on top of the H.264/MVC codec may also include:

- High level syntax to support joint coding of texture and depth view components;
- Motion vector prediction between texture and depth view components and a mode in which depth view motion is adopted from associated texture view motion.

This disclosure also describes other tools, such as tools that allow for prediction between view components in different resolutions, and prediction of the slice headers from the texture view component to the corresponding depth view component. The texture view component and depth view component may form a view component that is a coded picture of one view in an access unit. Thus, techniques may allow for adoption of motion information in accordance with the described IVMP mode, or prediction (that include deltas) of motion information for a depth view relative to a texture view. Both tools may allow for coding flexibility, although the best compression may be achieved by limiting the tools to some extent. For example, the IVMP mode described herein may be limited to non-anchor pictures

Throughout the document, AVC refers to H.264/AVC High Profile. If any other H.264/AVC profile or amendment is being referred to, the amendment or profile name will be explicitly specified. For example, H.264/MVC or MVC refers to the multiview extension of H264/AVC. However, any amendment or profile of the H.264/AVC belongs to the AVC family, thus the proposed codec, if it is compatible to MVC Stereo High Profile, it is also compatible to AVC Stereo High Profile.

A codec description will now be provided. In this section, the proposed 3DVC codec is described from two aspects, a high level framework and low level coding techniques. If it is desirable to define a 3DV format that can have 2-view and 3-view configurations corresponding to potentially different applications, techniques in the 3-view case may form a superset of those in the 2-view case. Therefore in this section, the high level framework applicable to both cases is firstly illustrated, followed by the codec description of the techniques in the 2-view case which are applicable to the 3-view case, and then the techniques used only in the 3-view case are described.

A High Level Framework may use the following definitions:

**view component:** A *coded representation* of a *view* in a single *access unit.* When a view includes both coded texture and depth representations, a view component consists of a texture view component and a depth view component.

**texture view component:** A *coded representation* of the texture of a view in a single *access unit.*

**depth view component:** A *coded representation* of the depth of a view in a single *access unit.*

The coded VCL NAL units in a depth view component may be assigned with nal_unit_type 21, as a new type of coded slice extension specifically for depth view components.

A bit -stream order will now be described. In each view component, any coded slice NAL unit (with nal_unit_type 21) of the depth view component may need to follow all coded slice NAL units of the texture view component. For simplicity, this disclosure names the coded slice NAL units of the depth view component as depth NAL units.

A depth NAL unit has the same NAL unit header structure as the NAL unit with nal_unit_type equal to 20. FIG. 4 shows an exemplary bit-stream order of the VCL NAL units of the view components inside one access unit

As shown in Fig. 4, in one exemplary 3D video codec, an access unit contains multiple view components, each of which consists of one texture view component and one depth view component. The texture view component of the base view, with view order index (VOIdx) equal to 0, contains one prefix NAL unit (with NAL unit type equal to 14) and one or more AVC VCL NAL units (with NAL unit type equal to e.g., 1 or 5). Texture view components in other views contain only the MVC VCL NAL units (with NAL unit type equal to 20). In both base view and non-base views, the depth view components contain the depth NAL units with NAL unit type equal to 21. In any view component, the depth NAL units follow the NAL units of the texture view component in decoding/bitstream order.

In a 2-view case, this disclosure may adopt half-resolution encoding for both the left and right views. The characteristics of the proposed codec may include:

- Half horizontal or half vertical spatial resolution;
- Same resolution for the texture view components and the depth view components of each view;
- AVC High Profile compatible half-resolution base view (texture only);
- AVC Stereo High Profile compatible half-resolution stereoscopic views (texture only);

- Inter-view prediction from the depth view component of the base view to the depth view component of the non-base view;
- Texture to depth prediction inside a view component.

Half spatial resolution MVC is referred to below and mentioned in Table 1 below. All sequences may be coded with half-spatial resolution. Compared with H.264/AVC frame-compatible coding, half spatial resolution MVC is more efficient and it is more convenient to fulfill the following requirements:

- Forward compatibility: such a 2-view 3DVC bitstream contains an MVC sub-bitstream, which further contains an AVC sub-bitstream. Therefore, the proposed codec fulfills this requirement, especially: "*all compressed bitstreams. confirming to this mode shall enable existing AVC decoders to reconstruct samples from mono and stereo views from the bitstream.*"
- Stereo/Mono compatibility: VCL NAL units can be extracted simply by checking the NAL unit type to get the MVC or AVC sub-bitstream. Therefore, the proposed codec fulfills this requirement, especially: *"The compressed data format shall include a mode that enables the simple extraction of bitstreams for Stereo and mono output, and supports high-fidelity reconstruction of samples from the left and right views of the Stereo video."*

The half-spatial resolution sequences may be obtained by the MPEG 13-tap downsampling filter ([2,0,-4,-3,5,19,26,19,5,-3,-4,0,2]/64) for both texture and depth sequences. To achieve better quality, downsampling could be applied either horizontally or vertically. For sequences with dominant horizontal high frequency components, half vertical resolution can be used. In some examples, only one sequence is considered to belong to this category: *"Poznan_Hall2."* Other sequences are considered to have dominant vertical high frequency components, and horizontal downsampling is applied to obtain half horizontal resolution sequences.

Symmetric resolution for texture and depth may be used. A depth view component may be coded as an 8-bit mono sequence with the same resolution as the texture view component of the same view. In such a setting, prediction from texture view component to depth view component can be performed without scaling, e.g., the pixels or motion vectors in a MacroBlock (MB).

Inter-view prediction for depth view components may be supported. A depth view component can be predicted by other depth view components in the same access unit, in a same way as inter-view prediction in MVC. A depth view component refers to a subset Sequence Parameter Set (SPS), which has the view dependency signaled in the SPS MVC extension.

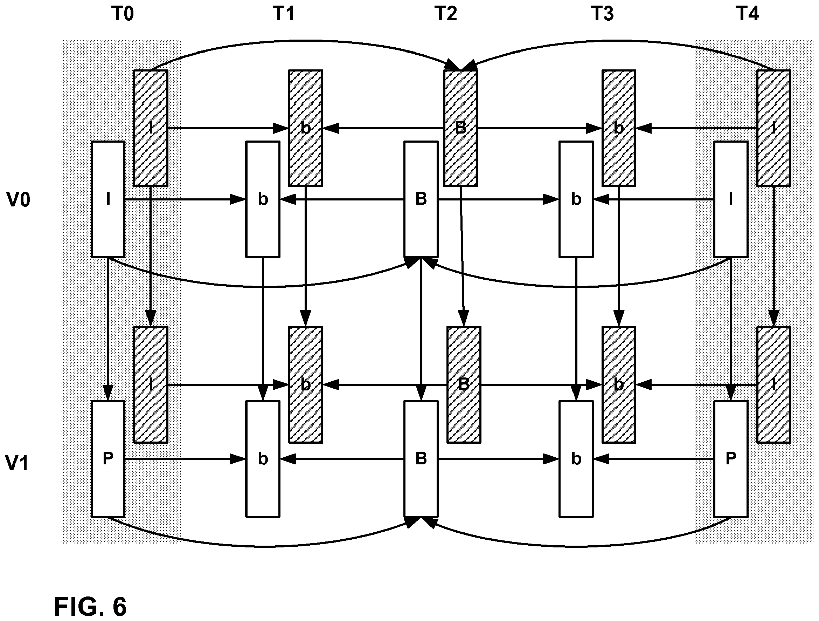

Typically, the prediction dependency of the depth view components shares the same view dependency of the texture view components, as shown in FIG. 6. It is also noticed that several sequences cannot benefit from inter-view prediction between depth views. Therefore the inter-view prediction for depth views can be simply disabled for such cases. FIG. 6 shows a prediction structure of the 3DVC codec. Depth view components (shown with cross-hatching) have the same prediction structure as the texture view components (shown without shading).

Therefore, a flag (disable_depth_inter_view_flag) can be signaled in SPS to disable or enable the inter-view prediction for depth views. More detailed SPS design for both 2-view and 3-view cases is described in greater detail below. For the depth map sequences that can benefit from inter-view prediction, the depth view components have the same inter prediction and inter-view prediction structures as the texture view components, as shown in FIG. 6

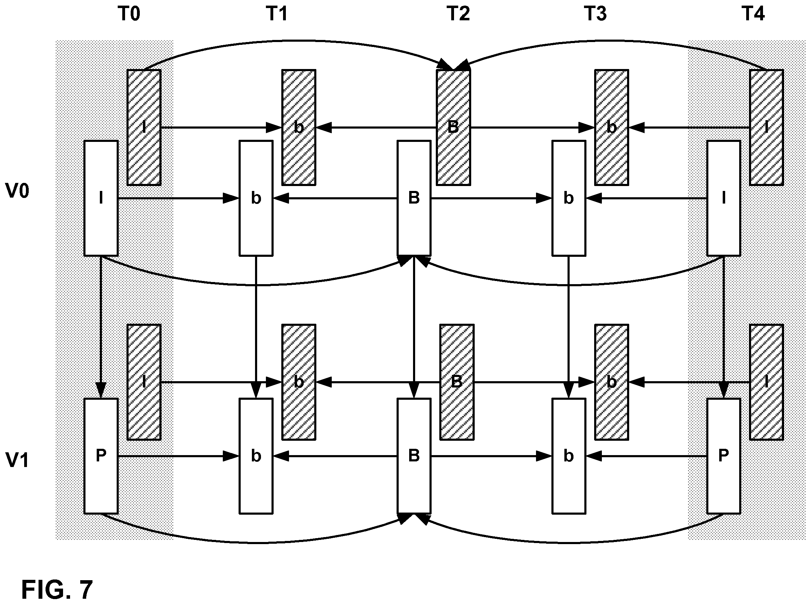

FIG. 7 shows a prediction structure of the 3DVC codec that does not allow inter-view prediction for depth view components. A component illustrated in FIG. 7 without shading indicates a texture view and the cross-hatched shading indicates a depth view. As shown in FIG. 7, inter-view prediction may be enabled for texture view components but totally disabled for depth view components. In such a case, a depth view component may have a different slice type than the corresponding texture view component.

Motion prediction from texture to depth will now be described. Since the texture view component and its associated depth view component have similar object silhouette, they have similar object boundary and movement, thus there is redundancy in their motion fields.

According to this disclosure, motion prediction from a texture view component to the associated depth view component can be enabled as a new mode in the proposed codec. In some examples the inside view motion prediction (IVMP) mode is enabled for an Inter coded MB only in depth view components. In IVMP mode, the motion information, including mb_type, sub_mb_type, reference indices and motion vectors of the co-located MB in texture view component are reused by the depth view component of the same view. A flag can be signaled in each MB to indicate whether it uses the IVMP mode. Consistent with FIG. 5, the flag may be true for the 4th picture of the depth view and the motion vector of the co-located MB in the 4th picture of the texture view (labeled 4th picture) is reused for the MB in the depth view component. In some examples, IVMP mode applies only to non-anchor pictures.

Slice header prediction will now be described. For each view component, there may be redundancy between the slice headers of depth view component and texture view component. Therefore, given the slice header of a texture view component, the depth view component within the same view of the same access unit has most of its slice header information determined already.

In accordance with this disclosure, the depth view components share most of the slice header syntax elements of the corresponding texture view components. The different syntax elements may include pic_parameter_set_id, slice_qp_delta, and potentially syntax elements related to reference picture list construction, including num_ref_idx_10_active_minus1, num_ref_idx_11_active_minus1 and reference picture list modification syntax table.

The slice header of a depth view component may be signaled in the slice header depth extension. Note that pred_slice_header_depth_idc may be signaled in the sequence parameter set. In some examples, the encoder may always set it to be 1.

Exemplary slice header depth extension syntax may conform to the example of Table 1 below.

**Table 1**

| slice_header_depth_extension() { | C | Descriptor |
|---|---|---|
| if (pred_slice_header_depth_idc==0 | | |
| slice_header () | | |
| else { | | |
| **pic_parameter_set_id** | 2 | ue(v) |
| if( slice_type == P \|\| slice_type == B ) { | | |
| **num_ref_idx_active_override_flag** | 2 | u(l) |
| if( num-ref_idx_active_overrife_flag ) { | | |
| **num_ref_idx10_active_minus1** | 2 | ue(v) |
| if( slice_type == B ) | | |
| **num_ref_idx_11_active_minus1** | 2 | ue(v) |
| } | | |
| } | | |
| ref_pic_list_mvc_modification () | 2 | |
| } | | |
| **slice_qp_delta** | 2 | se(v) |
| } | | |
| } | | |

A 3-view case will now be described. The techniques of this disclosure may adopt half-resolution encoding for both the left and right views, and full-resolution for the center view. The coding methods enabled in the 2-view case may also be supported for the codec in the 3-view case. The codec may contain the following characteristics for the 3-view case:

- Asymmetric spatial resolution in different views;
- Inter-view prediction from a low-resolution view to a high-resolution view;
- Sub-bitstream containing the texture view components of the low-resolution views is compatible to H.264/MVC Stereo High Profile.
- The signaling of the inter-view prediction dependency for the high-resolution views.

Inter-view prediction in an asymmetric 3DVC codec will now be described. Prediction from a reconstructed low-resolution view to a high-resolution view may be enabled, both between the texture view components and between the depth view components.

More specifically, in the 3-view case, the left view and right view may be coded with half-resolution and the center view may be coded with full-resolution. When inter-view prediction from a half-resolution view component to a full-resolution (texture or depth) view component happens, the decoded picture of a half-resolution view component, if to be used for inter-view prediction, is upsampled with the AVC 6-tap filter [1, -5, 20, 20, -5, 1]/32. In this case, both the low-resolution picture (needed for output) and also the upsampled picture may need to temporally co-exist in the buffer.

The upsampled pictures from the left and right views then can be put into the reference picture lists of a view component of the center view in the same access unit.

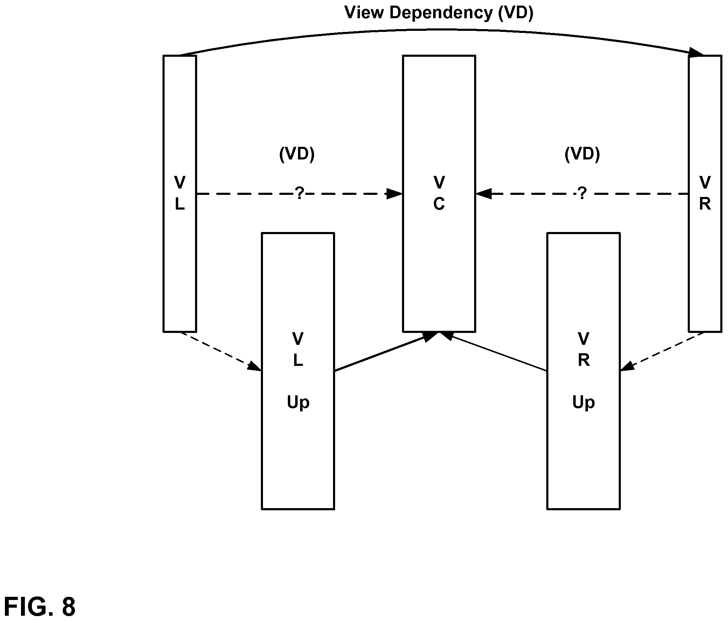

An asymmetric inter-view prediction is shown in FIG. 8, wherein both the left view (VL) and right view (VR) are with half-width. Since the view dependency allows them to be used as inter-view references for the center view (VC), they are both upsampled to intermediate pictures.

For the sake of simplicity, the low-resolution views, which are MVC compatible (if considering only the texture), are called MVC views, regardless of whether an "MVC view" refers to just the texture part or both the texture and depth parts. The other views with full-resolution are referred to as additional views. So in 3-view case, they are two MVC views, and one additional view. Each MVC view contains both the texture and depth in the same resolution that is half of the resolution of the additional view.

A sequence parameter set design will now be described. In some aspects of this disclosure, a new SPS extension may be introduced. The new SPS extension is added into the subset SPS if the profile indicated in the seq_parameter_set_data() is relevant to 3DV. In accordance with this disclosure, two potential profiles are considered, the "3DV Profile" and the "Asymmetric 3DV Profile", for two different cases. In other words, 3DV profile applies to the 2-view case and Asymmetric 3DV Profile applies to the 3-view case.

In MVC, new sequence level parameter set, i.e., the SPS MVC extension may be introduced and signaled in the subset SPS. Since MVC is considered as a base specification, in either of the newly added profiles, the subset SPS is further extended to signal a sequence parameter set 3DVC extension, on top of the SPS MVC extension.

In one proposed codec, the new SPS extension, namely sequence parameter set 3DVC extension, contains syntax to further signal inter-view dependencies for the high-resolution views for the Asymmetric 3DV Profile, as well as the inter-view dependency for the depth view components, which is applicable to both 3DV Profile and Asymmetric 3DV Profile.

In 3DV related applications, other syntax elements, e.g., those related to camera parameters and depth range and/or depth quantization may also be signaled in the SPS. However, in one proposed codec, this information may be considered available, and thus, not transmitted in the coded bitstream.

Table 2 shows examples of subset sequence parameter set raw byte sequence payload (RBSP) syntax.

Table 3 shows examples of sequence parameter set 3DVC extension syntax.

**Table 3**

| seq_parameter_set_3dvc_extension() { | C | Descriptor |
|---|---|---|
| [1]          **addition_view_flag** | 0 | u(I) |
| [2]              if ( addition_view_flag ) { |  |  |
| **[3] num_add_views_minis1** |  | ue(v) |
| for( i=0; i<=num_add_views_minus1;i++ |  |  |
| **view_id [i]** | 0 | ue(v) |
| for( i=0; i<=num_add_views_minus1 ;1++{ |  |  |
| **num_anchor_refs_10**[ i ] | 0 | ue(v) |
| **anchor_ref_10**[i][j] | 0 | ue(v) |
| **num_anchor_refs_10**[i] | 0 | ue(v) |
| for(j =0; j <num_anchor_refs_11[i]; j++) |  |  |
| **anchor_ref_11**[ i ][ j ] | 0 | ue(v) |
| } |  |  |
| for(j = 0; j<=mun_views_minisl;i++ { |  |  |
| **num_non_anchor-refs_10**[ i ] | 0 | ue(v) |
| for(j =0, j<num_non_anchor_refs_10[ i ]; j++ |  |  |
| **non_anchor_ref_10**[i][j] |  |  |
| **num_non_anchor_refs_10**[ i ] | 0 | ue(v) |
| for(j = 0; j<mun_non_anchor_refs_10[i] ; j++ |  |  |
| **non_anchor_ref_10**[i] [j] | 0 | ue(v) |

(continued)

| seq_parameter_set_3dvc_extension() { | C | Descriptor |
|---|---|---|
| **num_non_anchor_refs_11** [i] | 0 | ue(v) |
| for(j = 0; j < mun_non_anchor_refs_11[i] ; j++ | | |
| **non_anchor_ref_11**[i][j] | 0 | ue(v) |
| } | | |
| } | | |
| **disable_depth_inter_view_flag** | 0 | u(2) |
| **pred_slice_header_depth_ide** | 0 | u(2) |
| } | | |

In one proposed 3DVC codec, the camera parameters as well as the depth ranges may not be included in the bitstream since they do not have normative impact on the decoded views. However, they can be helpful for view synthesis and potential coding tools which e.g., use view synthesis as a specific mode. If camera parameters or depth range are needed for a specific coding tool, they may be transmitted in a normative and mandatory fashion, within the parameter sets, such as SPS, Picture Parameter Set (PPS) or even a new type of parameter set, namely View Parameter Set (VPS) if such information may vary in a frame-by-frame basis. If they are not necessary for the decoding of any the transmitted texture or depth, they could be signaled in SEI messages (sequence level or picture level).

This section gives realization on how the above information can be signaled in a bitstream. The signaling of camera parameters and depth ranges may be implemented in software but not enabled for the generation of the bitstreams.

Table 4 shows examples of camera parameters and depth ranges in SPS 3DVC extension

**Table 4**

| seq_parameter_set_3dve_extension () { | C | Descriptor |
|---|---|---|
| **[4]** ... | | |
| cam_parameters () | | |
| depth_ranges () | | |
| } | | |

In the camera parameters syntax table, a floating point value V may be represented with its precision $P$, which is the number of digits before or after the decimal point, and an integer value $I$, such that: $V=I*10^P$. The sign of V may be the same as that of $I$. Such a proposed representation may be accurate enough for camera parameters and depth ranges and it can be relatively easy to parse and construct a floating point value.

Given a requirement that *"the source video data should be rectified to avoid misalignment of camera geometry and colors* " as stated in the CfP, in this disclosure, it may be assumed that multiple views share the same intrinsic parameters and most of the extrinsic parameters except the horizontal translation.

Table 5 and the paragraphs that follow show exemplary camera parameters syntax and semantics.

**Table 5**

| cam_parameters() { | C | Descpritor |
|---|---|---|
| **cam_param_present_flag** | 0 | u(l) |
| if (cam_param_present_flag) { | | |
| //instrinsic parameters | | |
| **focal_length_precison** | 0 | se(v) |
| **focal_length_x_I** | 0 | ue(v) |
| **focal_length_I_diffe_x** | 0 | se(v) |

(continued)

| cam_parameters() { | C | Descpritor |
|---|---|---|
| **principal_precision** | 0 | se(v) |
| **principal_poin_x_I** | 0 | se(v) |
| **principal_poin_y_I_diff_x** | 0 | se(v) |
| //extrinsic parameters | | |
| **rotation_xy_half_pi** | 0 | u(1) |
| **rotation_xz_half_pi** | 0 | u(1) |
| **rotation_yz_half_pi** | 0 | u(1) |
| **translation-precision** | 0 | se(v) |
| **anchor_view_id** | 0 | ue(v) |
| **zero_translation-present_flag** | 0 | u(1) |
| if(!zero_translation-present_flag | | |
| **translation_anchor_view_I** | 0 | se(v) |
| for(i =0; i<numViewsMinusl;i++ | | |
| if (view_id[ i ]!=anchor_view_id | | |
| **translation_diff_anchor_view_I**[ i ] | 0 | se(v) |
| } | | |
| } | | |

In Table 5, **cam_param_present_flag** equal to 1 may indicate that the camera parameters are signaled in this SPS. cam_param_present_flag equal to 0 may indicate that the camera parameters are not signaled in this SPS.

In Table 5, **focal_length_precision** specifies the precision of the values of focal_length_x and focal_length_y, which are the x coordinate focal length and y coordinate focal of all the cameras.

In Table 5, **focal_length_x_I** specifies the integer part of the value of focal_length_x.

$$focal\_length\_x = focal\_length\_x\_I * 10^{focal\_length\_precision}$$

In Table 5, **focal_length_y_I_diff_x** plus focal_length_x_I specifies the integer part of the value of focal_length_y.

$$focal\_length\_y = (focal\_length\_x\_I + focal\_length\_y\_I\_diff\_x) * 10^{focal\_length\_precision}$$

In Table 5, **principal_precision** specifies the precision of the values of principal_point_x and principal_point_y, which are the x coordinate principal point and y coordinate principal point of all the cameras.

In Table 5, **principal_point_x_I** specifies the integer part of the value of principal_point_x.

$$principal\_point\_x = principal\_point\_x\_I * 10^{principal\_precision}$$

In Table 5, **principal_point_y_I_diff_x** plus principal_point_x specifies the integer part of the value of principal_point_y.

$$principal\_point\_y=$$

$$(principal\_point\_x\_I+principal\_point\_y\_I\_diff\_x)*10^{principal\_precision}$$

The rotation matrix R for each camera may be represented as follows:

$$R = \begin{bmatrix} R_{yz} & 0 & 0 \\ 0 & R_{xz} & 0 \\ 0 & 0 & R_{xy} \end{bmatrix}$$

In Table 5, **rotation_kl_half_pi** indicates the diagonal elements of the rotation matrix **R**, *with* kl equal to xy, yz, or xz, wherein $R_{kl}=(-1)^{rotation\_kl\_half\_pi}$. This flag equal to 0 indicates $R_{kl}=1$; this flag equal to 1 indicates $R_{kl}=-1$.
In Table 5, **translation_precision** specifies the precision of the values of translations of all the views. The precision of translation values applies to all the translation values of the views referring to this SPS.
In Table 5, numViewsMinus1 is derived as num_views_minus1 + num_add_views_minus1 +1.
In Table 5, **anchor_view_id** specifies the view_id of the view, the translation of which is used as an anchor to calculate the translation of the other views.
In Table 5, **zero_translation_present_flag** equal to 1 indicates that the translation of the view with view_id equal to anchor_view_id is 0; this value equal to 0 indicates the translation of the view with view_id equal to anchor_view_id is signaled.
In Table 5, **translation_anchor_view_I** specifies the integer part of the translation of the anchor view. Denote the translation of the anchor view as translation_anchor_view. Translation_anchor_view is equal to 0 when zero_translation_present_flag is equal to 0, otherwise, the translation is calculated as follows.
In Table 5,

$$translation\_anchor\_view = translation\_anchor\_view\_I*10^{translation\_precision}$$

In Table 5, **translation_diff_anchor_view_I[**i] plus translation_anchor_view_I specifies the integer part of the translation of the view with view_id equal to view_id[i], denoted as translation_view_I[i].
Denote the translation of the view with view_id equal to view_id[i] as translation_view[i].

$$translation\_view[\,i\,]=$$

$$(translation\_diff\_anchor\_view\_I[\,i\,]+ translation\_anchor\_view\_I)\,*10^{translation\_precision}$$

Table 6 and the paragraphs that follow show exemplary depth ranges syntax and semantics

**Table 6**

| depth_ranges() { | C | Descriptor |
|---|---|---|
| **depth_range_present_flag** | 1 | u(1) |
| if (depth_range_present_flag ) { | | |
| //depth range | | |
| **z_near_precision** | 1 | se(v) |
| **z_far_precision** | 1 | se(v) |
| **different_depth_range_flag** | 1 | u(1) |
| **anchor_view_id** | 1 | ue(v) |
| **z_near_integer** | 1 | se(v) |

(continued)

| depth_ranges() { | C | Descriptor |
|---|---|---|
| **z_far_integer** | 1 | se(v) |
| if (different_depth_range_flag ) | | se(v) |
| for(i =0; i <= numViewsMinus1 ; i++ | | se(v) |
| if (view_id[ i ]!=anchor_view_id) { | | |
| **z_near_diff_anchor_view_I[i]** | 1 | |
| **diff_anchor_view_I[]i**. | 1 | |
| } | | |
| } | | |
| } | | |

In Table 6, **depth_range_present_flag** equal to 1 indicates that the depth ranges for all the views are signaled in this SPS, depth_range_present_flag equal to 0 indicates that the depth ranges are not signaled in this SPS.

In Table 6, **z_near_precision** specifies the precision of a z_near value. The precision of z_near as specified in this SPS applies to all the z_near values of the views referring to this SPS.

In Table 6, **z_far_precision** specifies the precision of a z_far value. The precision of z_far as specified in this SPS applies to all the z_far values of the views referring to this SPS.

In Table 6, **different_depth_range_flag** equal to 0 indicates that the depth ranges of all the views are the same and are in the range of z_near and z_far, inclusive. different_depth_range_flag equal to 1 indicates that the depth ranges of all the views may be different: z_near and z_far are the depth range for the anchor view, and z_near[i] and z_far[i] are further specified in this SPS as the depth range of a view with view_id equal to view_id[i].

In Table 6, **z_near_integer** specifies the integer part of the value of z_near. $z\_near= z\_near\_integer*10^{z\_near\_precision}$

In Table 6, **z_far_integer** specifies the integer part of the value of z_far. $z\_far= z\_far\_integer*10^{z\_far\_precision}$

In Table 6, **z_near_diff_anchor_view_I** plus z_near_integer specifies the integer part of the nearest depth value of the view with view_id equal to view_id[i], denoted as z_near_I[i].

Denote the z_near of the view with view_id equal to view_id[i] as z_near[i]. $z\_near[i]= (z\_near\_diff\_anchor\_view\_I[i] + z\_near\_integer) *10^{z\_near\_precision}$

In Table 6, **z_far_diff_anchor_view_I** plus z_far_Integer specifies the integer part of the farthest depth value of the view with view_id equal to view_id[i], denoted as z_far_I[i].

$$z\_far[ i ]= (z\_far\_diff\_anchor\_view\_I[ i ] + z\_far\_integer) *10^{z\_far\_precision}$$

Table 7 shows exemplary view parameter set RBSP syntax.

**Table 7**

| view_parameter_set_rbsp( ) { | C | Descriptor |
|---|---|---|
| view_parameter_set()) | | |
| } | | |

A NAL unit containing this view parameter set RBSP can be assigned a new NAL unit type, e.g., 16.

Table 8 and the paragraphs that follow show exemplary view parameter set syntax and semantics.

**Table 8**

| view_parameter_set( ){ | C | Descriptor |
|---|---|---|
| **seq_para_set_id** | 1 | ue(v) |
| for(i=0; i<=numViewsMinus1;i++ { | | |

(continued)

| view_parameter_set( ){ | C | Descriptor |
|---|---|---|
| delta_translation_update_view_I[i] | 1 | se(v) |
| z_near_update_view_I[ i ] | 1 | se(v) |
| z_far_update_viex_I[ i ] | 1 | se(v) |
| } | | |
| rbsp_trailing_bits() | 1 | |
| } | | |

The depth range and the translation of a camera may change in a picture basis. The updated depth range or camera parameters may be applicable to the view components of the current access unit and the following view components in the bitstream, until a new VPS following the current VPS updates those values for the related views.

For simplicity, the semantics of the syntax elements are not given. For the translation or depth range of each view, the integer part of the difference between the new value and the value signaled in the SPS (with an identifier equal to seq_para_set_id), can be signaled in this VPS. The updated values of translation and depth range can be calculated as follows:

$$translation\_view[\,i\,]=$$
$$(\,translation\_view\_integer[\,i\,] + translation\_update\_view\_I[\,i\,])*10^{translation\_precision}$$

$$z\_near[\,i\,]=$$
$$(z\_near\_integer[\,i\,] + z\_near\_update\_view\_I[\,i\,])*10^{z\_near\_precision}$$

$$z\_far[\,i\,]= (z\_far\_integer[\,i\,] + z\_far\_update\_view\_I[\,i\,])*10^{z\_far\_precision}$$

wherein translation_view_integer[i], z_near_integer[i] and z_far_integer[i] are the integer parts of the values of translation_view[i], z_near[i], and z_far[i] are calculated based on the signaling in SPS.

One or more of the techniques of this disclosure may be used to provide coding improvements in terms of compression and/or quality. Encoding time and complexity can also be improved using one or more of the techniques of this disclosure. Decoding time and complexity may also be improved. In addition, the amount of memory usage at the encoder and decoder may be improved or reduced relative to other techniques.

In some examples, both the encoder and decoder may have the same level of memory consumption as JMVC encoder and decoder. Thus, the memory usage may be considered to be proportional to the number of view components, e.g., in an access unit. If depth view component are always stored as 4:0:0, with the same number of views, the proposed solutions may consume approximately 5/3 (about 67% increase) of the memory used by JMVC for either encoder or decoder. Note that for the simplicity of operations, e.g., viewing the depth maps and using them for view synthesis, the encoder and decoder may still take and output the depth files in a 4:2:0 chroma sampling format.

Complexity characteristics of the decoder will now be described. In some examples, both the encoder and decoder consistent with the techniques of this disclosure may have the same level of complexity as the JMVC encoder and decoder. When compared with JMVC, the computational complexity of a codec consistent with this disclosure may be related to the number of views and the spatial resolution of each view. In other words, a codec consistent with this disclosure may require the same amount of computations as JMVC codec, as long as they both take the same video with the same number of pixels.

At the decoder side, a normative picture level upsampling may be needed for the Asymmetric 3DV Profile. However, such a decoding process might be considered as less complex than the other decoding processes for the decoding of a high resolution view component, so the complexity characteristics may still be indicated e.g., by how many MBs are to be processed per second.

An encoder consistent with techniques described herein may follow the current JMVC encoder scheme, wherein views are encoded one by one. Inside each view, the texture sequence is firstly encoded, and the depth sequence is then encoded.

When IVMP mode is enabled, during texture view component encoding, the motion filed of each texture view component is written into a motion file, the name of which can be specified in the configure file. When encoding the associated depth sequence of the same view, the motion file is read for reference.

The encoder may use the same configuration as JMVC with the following additional items.

**MotionFile**

*String, default: "motion"*

Specifies the filename (without the .dat) of the motion sequence to be generated. This sequence is provided for IVMP mode. *motion_0.dat, motion_1.dat, etc.* will be created by the encoder automatically.

**HalfSizeDimension**

*Unsigned Int, default: 0*

Indicates if asymmetric spatial resolution is used and if it is used, the subsampling dimension. The following values are supported:

0 - All the views are encoded with the same spatial resolution.
1 - Asymmetric spatial resolution is used and the half-resolution views have a half-width of the other views.
2 - Asymmetric spatial resolution is used and the half-resolution views have a half-height of the other views.

**BasisQP_texture**

*Double, default: 26*

Specifies the basic quantization parameter of the texture view component with half-spatial resolution.

**BasisQP_depth**

*Double, default: 26*

Specifies the basic quantization parameter of the depth view component with half-spatial resolution.

**BasisQP_texture_delta**

*Unsigned Int, default: 0*

Specifies the basic quantization parameter offset for the basic quantization parameter of the texture view component with full spatial resolution, compared with the basic quantization parameter of the texture view component with half spatial resolution. The basic quantization parameter of the texture view component with full spatial resolution is calculated by *BasisQP_texture(full spatial resolution) = BasisQP_texture + BasisQP_texture_delta.*

**BasisQP_depth_delta**

*Unsigned Int, default:0*

Specifies the basic quantization parameter offset for the basic quantization parameter of the depth view component with full spatial resolution, compared with the basic quantization parameter of the depth view component with half spatial resolution. The basic quantization parameter of the depth view component with full spatial resolution is calculated by *BasisQP_depth(full spatial resolution) = BasisQP_depth + BasisQP_depth_delta.*

**NoDepthInterViewFlag**

*Flag (0 or 1), default:0*

Specifies whether inter-view prediction is enabled for any depth view component. When *NoDepthInterViewFlag* is equal to 0, inter-view prediction is enabled. When *NoDepthInterViewFlag* is equal to 1, inter-view prediction is disabled.

**HalfRes**

*Flag (0 or 1), default: 0*

This value is associated with a *View_ID* value as part of the property of each reference view signaled in the view dependency portion.

Specifies whether the view identified by *View_ID* is half spatial resolution or not. When the *HalfRes* is equals to 0, it is a full spatial resolution view. When the *HalfRes* is equals to 1, it is a half spatial resolution view.

The encoder can be used for generating the bitstreams. An exemplary encoder call is illustrated in the following example.

```
H264AVCEncoderLibTestStatic.exe -vf <mcfg> <view_id> <component_idx>
```

Here, the *mcfg* represents the filename of the configurations file. The configuration file may be specified for each encoder call. The element *view_id* represents the view that is to be encoded. The element *component_idx* indicates whether the current sequence to be encoded is texture (when *component_idx* equals to 1) or depth (when *component_idx* equals to 0) of the specific view. The encoder may be run for each view component of each view that is to be encoded.

The decoder may be similar to the JMVC decoder, with the major modification of decoding and outputting also a depth sequence for each view. In the Asymmetric 3DV Profile, an upsampling is needed to convert the MVC view (left or right) to a high resolution for the prediction of the additional view (center).

An assembler may have very minor modifications to discard the duplicated parameter set NAL units, the complexity is the same as the JMVC assembler.

With respect to a view synthesizer modifications relative to JMVC may not be needed.

Several features for an H.264/MVC based 3DVC codec have been described, which can fulfill all the "shall" requirements of the proposal, and may provide good coding performance with a relatively small amount of additional coding methods. The methods include the high level framework for the joint coding of texture and depth, prediction from texture to depth inside a view component, and inter-view prediction between texture or depth view components with asymmetric spatial resolutions.

An MVC-based 3DV codec may be standardized for short-term market needs and the proposed features of this disclosure may be a basis of the reference software and working draft of such a 3DV codec.

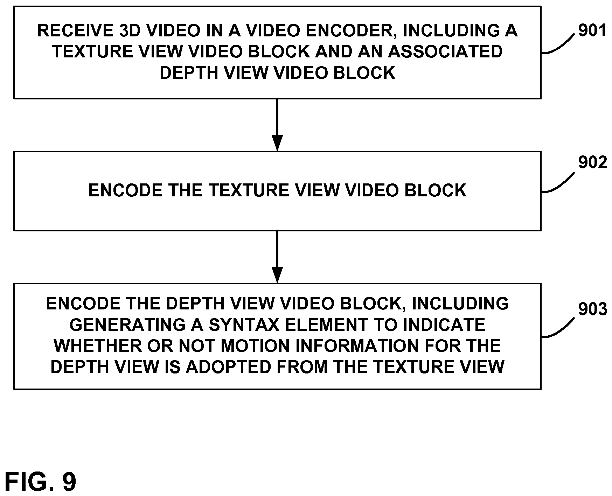

FIG. 9 is a flow diagram illustrating a technique that may be performed by a video encoder consistent with this disclosure. FIG. 9 will be described from the perspective of video encoder 20 of FIG. 2, although other video encoders could also be used. As shown in FIG. 9, prediction module 41 receives 3D video, e.g., video blocks that represent 3D rendition (901). The 3D video includes a texture view video block and an associated depth view video block (901). Prediction module 41 encodes the texture view video block (902). In addition, prediction module 41 encodes the depth view video block (903).

In accordance with this disclosure, prediction module 41 supports an IVMP mode. In particular, prediction module 41 generates a syntax element to indicate whether or not motion information for the depth view is adopted from the texture view (903). In this way, if the IMVP mode is enabled, the depth view component may not include any additional delta values with respect to its motion information, and instead, may adopt the motion information of the texture view component as its motion information. In particular, with the IMVP mode, the depth view component may not include any motion vector different values, but may fully adopt the motion vector of the corresponding texture view component. By defining a mode that fully adopts motion information of a texture view as the motion information of a depth view, without any signaling of motion vector delta values with respect to such motion information, improved compression may be achieved.

The texture view video block and the depth view video block may be coded together in network abstraction layer (NAL) unit, and the syntax element may comprise a flag in the NAL unit to indicate whether or not the motion information associated with the texture view video block is adopted as the motion information associated with the depth view video block. In this case, if the syntax element indicates that the motion information associated with the texture view video block is adopted as the motion information associated with the depth view video block, the depth view video block does not include any additional delta with respect to the motion information associated with the depth view video block. NAL units are one specific type of access unit used for coding video data, and the techniques may also be used with other types of video units.

More specifically, the syntax element may comprise one or more bits that indicate whether the IVMP mode is enabled or not. If the IVMP mode is disabled, the motion information associated with the texture view video block is included in the NAL unit and the motion information associated with the depth view video block is separately included in the NAL unit. Alternatively, if the IVMP mode is enabled, the motion information associated with the texture view video block is included in the NAL unit and the motion information associated with the texture view video block is adopted as the motion information associated with the depth view video block. Accordingly, if the IVMP mode is enabled, the depth view video block does not include any additional delta with respect to the motion information associated with the depth view video block. In some examples, the IVMP mode only applies to non-anchor pictures and does not apply to anchor pictures.

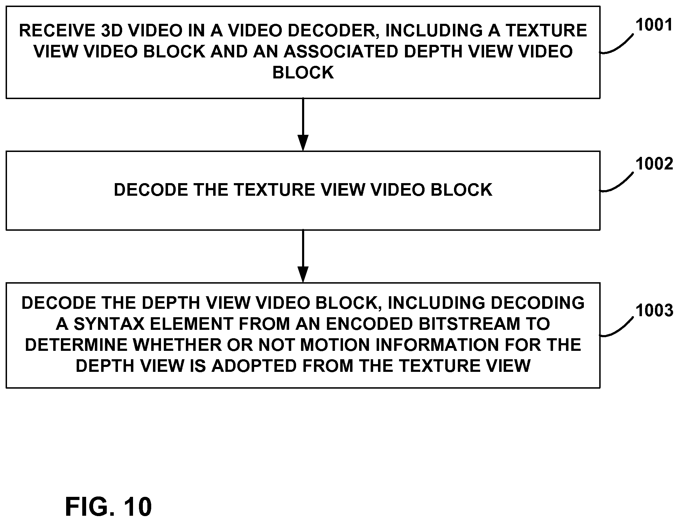

FIG. 10 is a flow diagram illustrating a technique that may be performed by a video decoder consistent with this disclosure. FIG. 10 will be described from the perspective of video decoder 30 of FIG. 3, although other video decoders could also be used. As shown in FIG. 10, prediction module 81 receives 3D video, e.g., video blocks that represent 3D video data (1001). The 3D video includes a texture view video block and an associated depth view video block (1001). Prediction module 41 decodes the texture view video block (1002). In addition, prediction module 41 decodes the depth view video block (1003).

In accordance with this disclosure, prediction module 81 supports an IVMP mode. In particular, prediction module 81 decodes a syntax element to indicate whether or not motion information for the depth view is adopted from the texture view (1003). The syntax element may be interpreted by the decoder as indicating whether or not the motion information of the depth view is adopted from the texture view. If the IMVP mode is enabled the depth view component may not include any additional delta values with respect to its motion information, and instead, may adopt the motion information of the texture view component as its motion information. Again, by defining a mode that fully adopts motion information of a texture view as the motion information of a depth view, without any signaling of delta values with respect to such motion information, improved compression may be achieved.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

In still other examples, this disclosure may be directed to a computer-readable storage medium that stores data structures thereon. The data structures may include 3D video data that is compress in the manner described herein, such as by using the IVMP mode to code a depth view relative to a texture view.

Various examples have been described. These and other examples are within the scope of the following claims.

## Claims

1. A method for coding three-dimensional, 3D, video data comprising:

    coding a texture view video block; and
    coding a depth view video block, wherein the depth view video block is associated with the texture view video block,
    wherein coding the depth view video block includes coding a syntax element indicative of whether or not an inside view motion prediction, IVMP, mode is enabled such that motion information associated with the texture view video block is adopted as motion information associated with the depth view video block,
    wherein the texture view video block and the depth view video block are coded together in a unit,
    wherein if the IVMP mode is disabled, the motion information associated with the texture view video block is included in the unit and the motion information associated with the depth view video block is separately included in the unit, and
    wherein if the IVMP mode is enabled, the motion information associated with the texture view video block is included in the unit, and the motion information associated with the texture view video block is adopted as the motion information associated with the depth view video block.

2. The method of claim 1, wherein the syntax element comprises a flag defined at a video block level, the flag being indicative of whether or not the IVMP mode is enabled such that the motion information associated with the texture view video block is adopted as the motion information associated with the depth view video block.

3. The method of claim 1, wherein coding comprises encoding, and wherein coding the syntax element comprises generating the syntax element.

4. The method of claim 1, wherein coding comprises decoding, wherein coding the syntax element comprises decoding the syntax element from an encoded bitstream, and wherein the syntax element is included in the encoded bitstream.

5. A device configured to encode three-dimensional, 3D, video data, the device comprising:

    means for encoding a texture view video block; and
    means for encoding a depth view video block, wherein the depth view video block is associated with the texture view video block,
    wherein the means for encoding the depth view video block includes means for generating a syntax element indicative of whether or not an inside view motion prediction, IVMP, mode is enabled such that motion information associated with the texture view video block is adopted as motion information associated with the depth view video block,
    wherein the texture view video block and the depth view video block are coded together in a unit,
    wherein if the IVMP mode is disabled, the motion information associated with the texture view video block is included in the unit and the motion information associated with the depth view video block is separately included in the unit, and
    wherein if the IVMP mode is enabled, the motion information associated with the texture view video block is included in the unit, and the motion information associated with the texture view video block is adopted as the motion information associated with the depth view video block.

6. The device of claim 5, wherein the syntax element comprises a flag defined at a video block level, the flag being indicative of whether or not the IVMP mode is enabled such that the motion information associated with the texture view video block is adopted as the motion information associated with the depth view video block.

7. The device of claim 5 or claim 6, wherein the means for encoding the texture view video block, the means for encoding the depth view video block, and the means for generating the syntax element comprises one or more processors configured to:

> encode the texture view video block;
> encode the depth view video block; and
> generate the syntax element indicative of whether or not the IVMP mode is enabled.

8. A device configured to decode three-dimensional, 3D, video data, the device comprising:

> means for decoding a texture view video block; and
> means for decoding a depth view video block, wherein the depth view video block is associated with the texture view video block,
> wherein the means for decoding the depth view video block includes means for decoding a syntax element included in an encoded bitstream, the syntax element being indicative of whether or not an inside view motion prediction, IVMP, mode is enabled such that motion information associated with the texture view video block is adopted as motion information associated with the depth view video block,
> wherein the texture view video block and the depth view video block are coded together in a unit,
> wherein if the IVMP mode is disabled, the motion information associated with the texture view video block is included in the unit and the motion information associated with the depth view video block is separately included in the unit, and
> wherein if the IVMP mode is enabled, the motion information associated with the texture view video block is included in the unit, and the motion information associated with the texture view video block is adopted as the motion information associated with the depth view video block.

9. The device of claim 8, wherein the syntax element comprises a flag defined at a video block level, the flag being indicative of whether or not the IVMP mode is enabled such that the motion information associated with the texture view video block is adopted as the motion information associated with the depth view video block.

10. The device of any of claims 8 and 9, wherein the means for decoding the texture view video block, the means for decoding the depth view video block, and the means for decoding the syntax element comprise one or more processors configured to:

> decode the texture view video block;
> decode the depth view video block; and
> decode the syntax element indicative of whether or not the IVMP mode is enabled.

11. The device of any one of claims 5 to 10, wherein the device comprises a wireless handset.

12. The device of any one of claims 5 to 10, wherein the device comprises one or more of:

> a digital television,
> a device in digital direct broadcast system,
> a device in wireless broadcast system,
> a personal digital assistants, PDA,
> a laptop computer,
> a desktop computer,
> a tablet computer,
> an e-book reader,
> a digital camera,
> a digital recording device,
> a digital media player,
> a video gaming device,
> a video game console,
> a cellular radio telephone,
> a satellite radio telephone,
> a smart phone,
> a video teleconferencing device, and

a video streaming device.

**13.** A computer-readable storage medium comprising instructions stored thereon, wherein the instructions upon execution cause one or more processors to perform the method according to any one of claims 1 to 4.

**Patentansprüche**

**1.** Verfahren zum Codieren von dreidimensionalen (3D) Videodaten, das Folgendes beinhaltet:

Codieren eines Texturansichts-Videoblocks; und
Codieren eines Tiefenansichts-Videoblocks, wobei der Tiefenansichts-Videoblock mit dem Texturansichts-Videoblock assoziiert ist,
wobei das Codieren des Tiefenansichts-Videoblocks das Codieren eines Syntaxelements beinhaltet, das anzeigt, ob ein IVMP-(Inside View Motion Prediction)-Modus freigegeben ist oder nicht, so dass mit dem Texturansichts-Videoblock assoziierte Bewegungsinformationen als mit dem Tiefenansichts-Videoblock assoziierte Bewegungsinformationen übernommen werden,
wobei der Texturansichts-Videoblock und der Tiefenansichts-Videoblock zusammen in einer Einheit codiert sind,
wobei, wenn der IVMP-Modus gesperrt ist, die mit dem Texturansichts-Videoblock assoziierten Bewegungsinformationen in der Einheit enthalten sind und die mit dem Tiefenansichts-Videoblock assoziierten Bewegungsinformationen separat in der Einheit enthalten sind, und
wobei, wenn der IVMP-Modus freigegeben ist, die mit dem Texturansichts-Videoblock assoziierten Bewegungsinformationen in der Einheit enthalten sind und die mit dem Texturansichts-Videoblock assoziierten Bewegungsinformationen als die mit dem Tiefenansichts-Videoblock assoziierten Bewegungsinformationen übernommen werden.

**2.** Verfahren nach Anspruch 1, wobei das Syntaxelement einen auf einer Videoblockebene definierten Flag umfasst, wobei der Flag anzeigt, ob der IVMP-Modus freigegeben ist oder nicht, so dass die mit dem Texturansichts-Videoblock assoziierten Bewegungsinformationen als die mit dem Tiefenansichts-Videoblock assoziierten Bewegungsinformationen übernommen werden.

**3.** Verfahren nach Anspruch 1, wobei das Codieren Encodieren beinhaltet und wobei das Codieren des Syntaxelements das Erzeugen des Syntaxelements beinhaltet.

**4.** Verfahren nach Anspruch 1, wobei das Codieren Decodieren beinhaltet und wobei das Codieren des Syntaxelements das Decodieren des Syntaxelements aus einem encodierten Bitstrom beinhaltet und wobei das Syntaxelement in dem encodierten Bitstrom enthalten ist.

**5.** Gerät, konfiguriert zum Encodieren von dreidimensionalen (3D) Videodaten, wobei das Gerät Folgendes umfasst:

Mittel zum Encodieren eines Texturansichts-Videoblocks; und
Mittel zum Encodieren eines Tiefenansichts-Videoblocks, wobei der Tiefenansichts-Videoblock mit dem Texturansichts-Videoblock assoziiert ist,
wobei das Mittel zum Encodieren des Tiefenansichts-Videoblocks Mittel zum Erzeugen eines Syntaxelements beinhaltet, das anzeigt, ob ein IVMP-(Inside View Motion Prediction)-Modus freigegeben ist oder nicht, so dass mit dem Texturansichts-Videoblock assoziierte Bewegungsinformationen als mit dem Tiefenansichts-Videoblock assoziierte Bewegungsinformationen übernommen werden,
wobei der Texturansichts-Videoblock und der Tiefenansichts-Videoblock zusammen in einer Einheit codiert sind,
wobei, wenn der IVMP-Modus gesperrt ist, die mit dem Texturansichts-Videoblock assoziierten Bewegungsinformationen in der Einheit enthalten sind und die mit dem Tiefenansichts-Videoblock assoziierten Bewegungsinformationen separat in der Einheit enthalten sind, und
wobei, wenn der IVMP-Modus freigegeben ist, die mit dem Texturansichts-Videoblock assoziierten Bewegungsinformationen in der Einheit enthalten sind und die mit dem Texturansichts-Videoblock assoziierten Bewegungsinformationen als die mit dem Tiefenansichts-Videoblock assoziierten Bewegungsinformationen übernommen werden.

**6.** Gerät nach Anspruch 5, wobei das Syntaxelement einen auf einer Videoblockebene definierten Flag umfasst, wobei der Flag anzeigt, ob der IVMP-Modus freigegeben ist oder nicht, so dass die mit dem Texturansichts-Videoblock assoziierten Bewegungsinformationen als die mit dem Tiefenansichts-Videoblock assoziierten Bewegungsinformationen übernommen werden.

7. Gerät nach Anspruch 5 oder Anspruch 6, wobei das Mittel zum Encodieren des Texturansichts-Videoblocks, das Mittel zum Encodieren des Tiefenansichts-Videoblocks und das Mittel zum Erzeugen des Syntaxelements einen oder mehrere Prozessoren umfassen, konfiguriert zum:

Encodieren des Texturansichts-Videoblocks;
Encodieren des Tiefenansichts-Videoblocks; und
Erzeugen des Syntaxelements, das anzeigt, ob der IVMP-Modus freigegeben ist oder nicht.

8. Gerät, konfiguriert zum Decodieren von dreidimensionalen (3D) Videodaten, wobei das Gerät Folgendes umfasst:

Mittel zum Decodieren eines Texturansichts-Videoblocks; und
Mittel zum Decodieren eines Tiefenansichts-Videoblocks, wobei der Tiefenansichts-Videoblock mit dem Texturansichts-Videoblock assoziiert ist,
wobei das Mittel zum Decodieren des Tiefenansichts-Videoblocks Mittel zum Decodieren eines in einem encodierten Bitstrom enthaltenen Syntaxelements beinhaltet, wobei das Syntaxelement anzeigt, ob ein IVMP-(Inside View Motion Prediction)-Modus freigegeben ist oder nicht, so dass mit dem Texturansichts-Videoblock assoziierte Bewegungsinformationen als mit dem Tiefenansichts-Videoblock assoziierte Bewegungsinformationen übernommen werden,
wobei der Texturansichts-Videoblock und der Tiefenansichts-Videoblock zusammen in einer Einheit codiert sind,
wobei, wenn der IVMP-Modus gesperrt ist, die mit dem Texturansichts-Videoblock assoziierten Bewegungsinformationen in der Einheit enthalten sind und die mit dem Tiefenansichts-Videoblock assoziierten Bewegungsinformationen separat in der Einheit enthalten sind, und
wobei, wenn der IVMP-Modus freigegeben ist, die mit dem Texturansichts-Videoblock assoziierten Bewegungsinformationen in der Einheit enthalten sind und die mit dem Texturansichts-Videoblock assoziierten Bewegungsinformationen als die mit dem Tiefenansichts-Videoblock assoziierten Bewegungsinformationen übernommen werden.

9. Gerät nach Anspruch 8, wobei das Syntaxelement einen auf einer Videoblockebene definierten Flag umfasst, wobei der Flag anzeigt, ob der IVMP-Modus freigegeben ist oder nicht, so dass die mit dem Texturansichts-Videoblock assoziierten Bewegungsinformationen als die mit dem Tiefenansichts-Videoblock assoziierten Bewegungsinformationen übernommen werden.

10. Gerät nach einem der Ansprüche 8 und 9, wobei das Mittel zum Decodieren des Texturansichts-Videoblocks, das Mittel zum Decodieren des Tiefenansichts-Videoblocks und das Mittel zum Decodieren des Syntaxelements einen oder mehrere Prozessoren umfassen, konfiguriert zum:

Decodieren des Texturansichts-Videoblocks;
Decodieren des Tiefenansichts-Videoblocks; und
Decodieren des Syntaxelements, das anzeigt, ob der IVMP-Modus freigegeben ist oder nicht.

11. Gerät nach einem der Ansprüche 5 bis 10, wobei das Gerät ein drahtloses Handset ist.

12. Gerät nach einem der Ansprüche 5 bis 10, wobei das Gerät eines oder mehrere der Folgenden umfasst:

einen Digitalfernseher,
ein Gerät im digitalen Direkt-Broadcast-System,
ein Gerät in einem drahtlosen Broadcast-System,
einen Personal Digital Assistant PDA,
einen Laptop-Computer,
einen Desktop-Computer,
einen Tablet-Computer,
einen E-Book-Reader,
eine digitale Kamera,
ein digitales Aufzeichnungsgerät,
einen digitalen Media-Player,

ein Video-Gaming-Gerät,
eine Videospielekonsole,
ein zelluläres Funktelefon,
ein Satellitenfunktelefon,
ein Smartphone,
ein Video-Teleconferencing-Gerät, und
ein Video-Streaming-Gerät.

13. Computerlesbares Speichermedium, auf dem Befehle gespeichert sind, wobei die Befehle bei Ausführung bewirken, dass ein oder mehrere Computer das Verfahren nach einem der Ansprüche 1 bis 4 durchführen.

**Revendications**

1. Procédé de codage de données vidéo en trois dimensions, 3D, comprenant :

coder un bloc vidéo de vue de texture ; et
coder un bloc vidéo de vue de profondeur, où le bloc vidéo de vue de profondeur est associé au bloc vidéo de vue de texture,
dans lequel coder le bloc vidéo de vue de profondeur comprend coder un élément de syntaxe indicatif de si ou non un mode de prédiction de mouvement inter-vues, IVMP, est validé de telle sorte que l'information de mouvement associée au bloc vidéo de vue de texture est adoptée comme une information de mouvement associée au bloc vidéo de vue de profondeur,
dans lequel le bloc vidéo de vue de texture et le bloc vidéo de vue de profondeur sont codés ensemble comme une unité,
dans lequel si le mode IVMP est invalidé, l'information de mouvement associée au bloc vidéo de vue de texture est incluse dans l'unité et l'information de mouvement associée au bloc vidéo de vue de profondeur est incluse séparément dans l'unité, et
dans lequel si le mode IVMP est validé, l'information de mouvement associée au bloc vidéo de vue de texture est incluse dans l'unité, et l'information de mouvement associée au bloc vidéo de vue de texture est adoptée comme l'information de mouvement associée au bloc vidéo de vue de profondeur.

2. Procédé selon la revendication 1, dans lequel l'élément de syntaxe comprend un drapeau défini à un niveau de bloc vidéo, le drapeau étant indicatif de si ou non le mode IVMP est validé de telle sorte que l'information de mouvement associée au bloc vidéo de vue de texture est adoptée comme l'information de mouvement associée au bloc vidéo de vue de profondeur.

3. Procédé selon la revendication 1, dans lequel coder comprend décoder, et dans lequel coder l'élément de syntaxe comprend générer l'élément de syntaxe.

4. Procédé selon la revendication 1, dans lequel coder comprend décoder, dans lequel coder l'élément de syntaxe comprend décoder l'élément de syntaxe d'un train binaire codé, et dans lequel l'élément de syntaxe est inclus dans le train binaire codé.

5. Dispositif configuré pour coder des données vidéo en trois dimensions, 3D, le dispositif comprenant :

un moyen pour coder un bloc vidéo de vue de texture ; et
un moyen pour coder un bloc vidéo de vue de profondeur, où le bloc vidéo de vue de profondeur est associé au bloc vidéo de vue de texture,
dans lequel le moyen pour coder le bloc vidéo de vue de profondeur comprend un moyen pour coder un élément de syntaxe indicatif de si ou non un mode de prédiction de mouvement inter-vues, IVMP, est validé de telle sorte que l'information de mouvement associée au bloc vidéo de vue de texture est adoptée comme une information de mouvement associée au bloc vidéo de vue de profondeur,
dans lequel le bloc vidéo de vue de texture et le bloc vidéo de vue de profondeur sont codés ensemble comme une unité,
dans lequel si le mode IVMP est invalidé, l'information de mouvement associée au bloc vidéo de vue de texture est incluse dans l'unité et l'information de mouvement associée au bloc vidéo de vue de profondeur est incluse séparément dans l'unité, et

dans lequel si le mode IVMP est validé, l'information de mouvement associée au bloc vidéo de vue de texture est incluse dans l'unité, et l'information de mouvement associée au bloc vidéo de vue de texture est adoptée comme l'information de mouvement associée au bloc vidéo de vue de profondeur.

6. Dispositif selon la revendication 5, dans lequel l'élément de syntaxe comprend un drapeau défini à un niveau de bloc vidéo, le drapeau étant indicatif de si ou non le mode IVMP est validé de telle sorte que l'information de mouvement associée au bloc vidéo de vue de texture est adoptée comme l'information de mouvement associée au bloc vidéo de vue de profondeur.

7. Dispositif selon la revendication 5 ou 6, dans lequel le moyen pour coder le bloc vidéo de vue de texture, le moyen pour coder le bloc vidéo de vue de profondeur et le moyen pour générer l'élément de syntaxe comprennent un ou plusieurs processeurs configurés pour :

coder le bloc vidéo de vue de texture ;
coder le bloc vidéo de vue de profondeur ; et
générer l'élément de syntaxe indicatif de si le mode IVMP est validé ou non.

8. Dispositif configuré pour décoder des données vidéo en trois dimensions, 3D, le dispositif comprenant :

un moyen pour décoder un bloc vidéo de vue de texture ; et
un moyen pour décoder un bloc vidéo de vue de profondeur, où le bloc vidéo de vue de profondeur est associé au bloc vidéo de vue de texture,
dans lequel le moyen pour décoder le bloc vidéo de vue de profondeur comprend un moyen pour décoder un élément de syntaxe inclus dans un train binaire codé, l'élément de syntaxe étant indicatif de si ou non un mode de prédiction de mouvement inter-vues, IVMP, est validé de telle sorte que l'information de mouvement associée au bloc vidéo de vue de texture est adoptée comme une information de mouvement associée au bloc vidéo de vue de profondeur,
dans lequel le bloc vidéo de vue de texture et le bloc vidéo de vue de profondeur sont codés ensemble comme une unité,
dans lequel si le mode IVMP est invalidé, l'information de mouvement associée au bloc vidéo de vue de texture est incluse dans l'unité et l'information de mouvement associée au bloc vidéo de vue de profondeur est incluse séparément dans l'unité, et
dans lequel si le mode IVMP est validé, l'information de mouvement associée au bloc vidéo de vue de texture est incluse dans l'unité, et l'information de mouvement associée au bloc vidéo de vue de texture est adoptée comme l'information de mouvement associée au bloc vidéo de vue de profondeur.

9. Dispositif selon la revendication 8, dans lequel l'élément de syntaxe comprend un drapeau défini à un niveau de bloc vidéo, le drapeau étant indicatif de si ou non le mode IVMP est validé de telle sorte que l'information de mouvement associée au bloc vidéo de vue de texture est adoptée comme l'information de mouvement associée au bloc vidéo de vue de profondeur.

10. Dispositif selon la revendication 8 et 9, dans lequel le moyen pour décoder le bloc vidéo de vue de texture, le moyen pour décoder le bloc vidéo de vue de profondeur et le moyen pour décoder l'élément de syntaxe comprennent un ou plusieurs processeurs configurés pour :

décoder le bloc vidéo de vue de texture ;
décoder le bloc vidéo de vue de profondeur ; et
décoder l'élément de syntaxe indicatif de si le mode IVMP est validé ou non.

11. Dispositif selon l'une quelconque des revendications 5 à 10, où le dispositif comprend un combiné sans fil.

12. Dispositif selon l'une quelconque des revendications 5 à 10, où le dispositif comprend un ou plusieurs d'entre :

une télévision numérique,
un dispositif dans un système numérique de diffusion en direct,
un dispositif dans un système de diffusion sans fil,
un assistant numérique personnel, PDA,
un ordinateur portable,

un ordinateur de bureau,
une tablette,
un lecteur de livres électroniques,
une caméra numérique,
un dispositif d'enregistrement numérique,
un lecteur de médias numériques,
un dispositif pour jouer à des jeux vidéo,
une console de jeux vidéo,
un radiotéléphone cellulaire,
un radiotéléphone par satellite,
un téléphone intelligent,
un dispositif de visioconférence, et
un dispositif de vidéo en continu.

**13.** Support de stockage lisible par ordinateur comprenant des instructions stockées dessus, où lors de leur exécution les instructions font qu'un ou plusieurs processeurs mettent en oeuvre le procédé selon l'une quelconque des revendications 1 à 4.

FIG. 1

**FIG. 2**

**FIG. 3**

EP 2 735 152 B1

FIG. 4

EP 2 735 152 B1

FIG. 5

**FIG. 6**

FIG. 7

EP 2 735 152 B1

FIG. 8

RECEIVE 3D VIDEO IN A VIDEO ENCODER, INCLUDING A TEXTURE VIEW VIDEO BLOCK AND AN ASSOCIATED DEPTH VIEW VIDEO BLOCK — 901

ENCODE THE TEXTURE VIEW VIDEO BLOCK — 902

ENCODE THE DEPTH VIEW VIDEO BLOCK, INCLUDING GENERATING A SYNTAX ELEMENT TO INDICATE WHETHER OR NOT MOTION INFORMATION FOR THE DEPTH VIEW IS ADOPTED FROM THE TEXTURE VIEW — 903

FIG. 9

RECEIVE 3D VIDEO IN A VIDEO DECODER, INCLUDING A TEXTURE VIEW VIDEO BLOCK AND AN ASSOCIATED DEPTH VIEW VIDEO BLOCK ⟋1001

DECODE THE TEXTURE VIEW VIDEO BLOCK ⟋1002

DECODE THE DEPTH VIEW VIDEO BLOCK, INCLUDING DECODING A SYNTAX ELEMENT FROM AN ENCODED BITSTREAM TO DETERMINE WHETHER OR NOT MOTION INFORMATION FOR THE DEPTH VIEW IS ADOPTED FROM THE TEXTURE VIEW ⟋1003

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61561800 A
- US 61563771 A
- US 61522559 A
- US 61510738 A
- US 61522584 A
- US 61563772 A
- US 61624031 A